# EUROPÄISCHE PATENTSCHRIFT

(11) **EP 3 695 489 B1**
(45) Veröffentlichungstag und Bekanntmachung des Hinweises auf die Patenterteilung: **20.04.2022**
(21) Anmeldenummer: 18765431.4
(22) Anmeldetag: 04.09.2018
(51) Int. Cl.: H02K 3/12, H02K 3/28

(54) **STATOR FÜR EINE ELEKTRISCHE MASCHINE**
STATOR FOR AN ELECTRIC MACHINE
STATOR POUR UNE MACHINE ELECTRIQUE

(30) Priorität: 11.10.2017 DE 102017218078
(43) Veröffentlichungstag der Anmeldung: 19.08.2020
(73) Patentinhaber: Robert Bosch GmbH, 70442 Stuttgart (DE)
(72) Erfinder: ERMER, Martin, 31139 Hildesheim (DE); ELSER, Armin, 73553 Alfdorf-Brech (DE); HEIN, Tobias, 31028 Gronau (Leine) OT Eitzum (DE); HERZBERGER, Andreas, 71686 Remseck-Aldingen (DE); HEUSER, Patrick, 70372 Stuttgart (DE); RIEDL, Johannes, 81369 Muenchen (DE)
(86) Internationale Anmeldenummer: PCT/EP2018/073762
(87) Internationale Veröffentlichungsnummer: WO 2019/072456

(56) Entgegenhaltungen:
- US-A1- 2009 273 253
- US-A1- 2014 033 514

## Beschreibung

### Stand der Technik

Die Erfindung geht aus von einem Stator für eine elektrische Maschine nach der Gattung des Hauptanspruchs.

Es ist schon ein Stator für eine elektrische Maschine aus der DE 10 2013 225 130 A1 bekannt, mit einer als Steckwicklung ausgebildeten Mehrphasenwicklung, die einer bestimmten elektrischen Phase zugeordnete Wicklungsstränge aufweist, die jeweils wellenförmig durch im Stator ausgebildete Nuten verlaufen und jeweils aus verschiedenen Arten von Leiterelementen gebildet sind, wobei die Leiterelemente in der jeweiligen Nut in einer bestimmten Nutlage zwischen einer einem Nutgrund zugewandten ersten bzw. untersten Lage und einer dem Nutgrund abgewandten n-ten bzw. obersten Nutlage angeordnet sind, wobei n der Anzahl der Leiterelemente pro Nut entspricht und eine gerade Zahl ist, wobei die Leiterelemente jeweils durch stoffschlüssige Fügeverbindungen auf beiden Stirnseiten des Stators miteinander verbunden sind. Die Nuten des Stators enthalten jeweils nur zwei Leiterelemente der Steckwicklung. Dies erschwert die Anpassung des Drehmomentes und der Leistung der elektrischen Maschine an die jeweiligen Fahrzeuge, in denen die elektrische Maschine eingesetzt werden soll. Außerdem führt diese geringe Anzahl an Leiterelementen pro Nut zu vergleichsweise hohen Stromverdrängungsverlusten.

Die US 2014 033 514 A1 offenbart einen Stator gemäß den Oberbegriffen der unabhängigen Ansprüche 1 und 5.

### Vorteile der Erfindung

Die erfindungsgemäßen Statoren für eine elektrische Maschine mit den Merkmalen der unabhängigen Ansprüche haben demgegenüber den Vorteil, dass eine Anordnung der Steckwicklung in den Nuten des Stators erreicht wird, die mindestens vier Leiterelemente pro Nut umfasst.

Es wurde herausgefunden, dass auf diese Weise mehr Möglichkeiten bestehen, das Drehmoment und die Leistung der elektrischen Maschine auf einfache Weise an die jeweiligen Anforderungen anzupassen, ohne den prinzipiellen Aufbau der elektrischen Wicklung zu ändern.

Außerdem führt die höhere Anzahl an Leiterelementen pro Nut zu geringeren Stromverdrängungsverlusten und somit zu einem höheren Wirkungsgrad der elektrischen Maschine. Mit dem erfindungsgemäßen Konzept der elektrischen Steckwicklung wird also eine hohe Variabilität bezüglich der Anzahl der Leiterelemente pro Nut, einer Schränkweite der Leiterelemente und einer Verschaltung der Leiterelemente erreicht.

Diese Vorteile werden erfindungsgemäß an einem Stator erreicht, der die Merkmale des Anspruchs 1 bzw. 5 umfasst. Insbesondere weist jeder Wicklungsstrang eine Abfolge von mehreren ersten Wicklungsabschnitten und eine Abfolge von mehreren, mit der Abfolge von ersten Wicklungsabschnitten verbundenen zweiten Wicklungsabschnitten auf, wobei in jedem ersten Wicklungsabschnitt und in jedem zweiten Wicklungsabschnitt jeweils zwischen den gleichen zwei benachbarten Nutlagen hin- und hergesprungen wird. Außerdem ist jeder erste bzw. zweite Wicklungsabschnitt bezüglich der Nutlage mit dem nächst darüber oder nächst darunter liegenden ersten bzw. zweiten Wicklungsabschnitt über eine Verbindung von zwei Lagenverbinder-Leiterelementen verbunden und sind die bezüglich der Nutlage obersten bzw. untersten ersten Wicklungsabschnitte jeweils über ein Umkehrverbinder-Leiterelement mit einem der obersten bzw. untersten zweiten Wicklungsabschnitte derart verbunden, dass die Abfolge von zweiten Wicklungsabschnitten gegenüber der Abfolge von ersten Wicklungsabschnitten in die entgegengesetzte Umfangsrichtung verläuft. Die Umkehrverbinder-Leiterelemente haben erfindungsgemäß jeweils einen in der obersten oder untersten Nutlage liegenden Umkehrschenkel, dessen beidseitig aus der jeweiligen Nut vorstehende Verbindungsabschnitte in die gleiche Umfangsrichtung verlaufen.

Durch den erfindungsgemäßen Verlauf der Steckwicklung wird an beiden Stirnseiten jeweils ein über den Umfang gesehen sehr gleichmäßig oder regelmäßig aufgebauter Wickelkopf erreicht, der fertigungstechnisch sehr einfach herstellbar ist. Dies verringert die Herstellkosten des erfindungsgemäßen Stators.

Die erfindungsgemäße Steckwicklung ist zumindest überwiegend aus stabförmigen oder I-förmigen Leiterelementen gebildet, die jeweils einen einzigen, in einer der Nuten des Stators befindlichen Schenkel aufweisen, der an seinen beiden aus der jeweiligen Nut vorstehenden Schenkelabschnitten jeweils abgewinkelt ist. Die Herstellung solcher stabförmigen oder I-förmigen Leiterelemente ist einfacher und kostengünstiger als die Herstellung von U-förmigen Leiterelementen. Auf einer der beiden Stirnseiten des Stators führen alle Leiterelemente einen Lagensprung um eine Lage aus.

Durch die in den Unteransprüchen aufgeführten Maßnahmen sind vorteilhafte Weiterbildungen und Verbesserungen des im Hauptanspruch angegebenen Stators möglich.

In einem ersten Aspekt der Erfindung gemäß Anspruch 1 sind die Umkehrschenkel der Umkehrverbinder-Leiterelemente jeweils an ihren beiden Verbindungsabschnitten auf der einen Seite über eine erste Umkehrverbindung mit einem in einer zweitobersten oder zweituntersten Nutlage liegenden Leiterschenkel eines obersten bzw. untersten ersten bzw. zweiten Wicklungsabschnitts und auf der anderen Seite über eine zweite Umkehrverbindung mit einem in der gleichen Nutlage liegenden Leiterschenkel eines obersten bzw. untersten zweiten bzw. ersten Wicklungsabschnitts verbunden, wobei die Schrittweite der zweiten Umkehrverbindung gegenüber der Schrittweite der ersten Umkehrverbindung bei einem verkürzten Umkehrverbinder-Leiterelement um eine Nut verschieden, insbesondere kleiner, und bei einem unverkürzten Umkehrverbinder-Leiterelement gleich ist.

Gemäß dem ersten Aspekt der Erfindung weist jeder Wicklungsstrang eine bestimmte Anzahl von zumindest zwei parallelen Wicklungszweigen auf. Außerdem umfasst jeder parallele Wicklungszweig nach dem ersten Ausführungsbeispiel eine einzige Abfolge von mehreren ersten Wicklungsabschnitten und eine einzige Abfolge von mehreren zweiten Wicklungsabschnitten.

Nach einem ersten Ausführungsbeispiel ist eine Abfolge von mehreren ersten Wicklungsabschnitten eines ersten Wicklungszweigs jeweils in einem ersten Satz von Nuten und eine Abfolge von mehreren zweiten Wicklungsabschnitten desselben ersten Wicklungszweigs jeweils in einem zweiten Satz von Nuten vorgesehen. Auf diese Weise sind der erste Satz von Nuten und der zweite Satz von Nuten zur Hälfte mit Leiterelementen gefüllt bzw. belegt. Der erste Satz von Nuten ist gegenüber dem zweiten Satz von Nuten jeweils um eine Nut versetzt ist. Außerdem ist eine Abfolge von mehreren ersten Wicklungsabschnitten eines parallelen zweiten Wicklungszweigs desselben Wicklungsstrangs jeweils in dem ersten Satz von Nuten und eine Abfolge von mehreren zweiten Wicklungsabschnitten desselben zweiten Wicklungszweigs jeweils in dem zweiten Satz von Nuten vorgesehen sind, so dass der erste Satz von Nuten und der zweite Satz von Nuten nun vollständig mit Leiterelementen gefüllt bzw. belegt ist.

Für jeden Wicklungszweig ist der jeweils oberste erste bzw. zweite Wicklungsabschnitt über ein verkürztes Umkehrverbinder-Leiterelement mit einem obersten zweiten bzw. ersten Wicklungsabschnitt und der jeweils unterste erste bzw. zweite Wicklungsabschnitt über ein weiteres verkürztes Umkehrverbinder-Leiterelement mit einem untersten zweiten bzw. ersten Wicklungsabschnitt verbunden. Auf diese Weise sind die beiden Enden der Abfolge von mehreren ersten Wicklungsabschnitten über die beiden Umkehrverbinder-Leiterelemente mit den beiden Enden der Abfolge von mehreren zweiten Wicklungsabschnitten verbunden. Dies ermöglicht eine lagen- und phasensymmetrische Wicklung mit mehreren parallelen Zweigen.

Vorzugsweise hat jeder Wicklungszweig zwei verkürzte Umkehrverbinder-Leiterelemente, von denen das eine verkürzte Umkehrverbinder-Leiterelement in einer der gleichphasigen Nuten eines Magnetpols in der obersten Nutlage und das andere verkürzte Umkehrverbinder-Leiterelement in der untersten Nutlage der anderen gleichphasigen Nut desselben Magnetpols angeordnet ist, oder umgekehrt.

Nach einer ersten Ausführungsform des ersten Ausführungsbeispiels kann der Wicklungsstrang ein Paar von parallelen Wicklungszweigen aufweisen, wobei die verkürzten Umkehrverbinder-Leiterelemente des einen Wicklungszweiges in der erfindungsgemäß vorgesehenen Nutlage der entsprechenden gleichphasigen Nuten eines ersten Magnetpols und die verkürzten Umkehrverbinder-Leiterelemente des anderen Wicklungszweiges in der erfindungsgemäß vorgesehenen Nutlage der entsprechenden gleichphasigen Nuten eines zum ersten Magnetpol benachbarten zweiten Magnetpols angeordnet sind. Weitere Paare von Wicklungszweigen können für weitere Ausführungsformen des ersten Ausführungsbeispiels über den Umfang der elektrischen Maschine verteilt symmetrisch angeordnet werden. So kann der Wicklungsstrang zwei Paare von Wicklungszweigen aufweisen, wobei die verkürzten Umkehrverbinder-Leiterelemente des ersten Paares von parallelen Wicklungszweigen in den entsprechenden gleichphasigen Nuten zweier benachbarter erster Magnetpole und die verkürzten Umkehrverbinder-Leiterelemente des zweiten Paares von parallelen Wicklungszweigen in den entsprechenden gleichphasigen Nuten zweier benachbarter, um 180 Grad zu den benachbarten ersten Magnetpolen versetzter Magnetpole angeordnet sind. Des weiteren kann der Wicklungsstrang vier Paare von Wicklungszweigen aufweisen, wobei die verkürzten Umkehrverbinder-Leiterelemente des ersten Paares von parallelen Wicklungszweigen in den entsprechenden gleichphasigen Nuten zweier benachbarter erster Magnetpole und die verkürzten Umkehrverbinder-Leiterelemente des zweiten, dritten und vierten Paares von parallelen Wicklungszweigen in den entsprechenden gleichphasigen Nuten zweier benachbarter, um 90 bzw. 180 bzw. 270 Grad zu den benachbarten ersten Magnetpolen versetzter Magnetpole angeordnet sind.

In einem zweiten Aspekt der Erfindung gemäß Anspruch 5 weist jeder Wicklungsstrang einen einzigen Wicklungszweig auf. Dieser einzige Wicklungszweig umfasst eine Abfolge von mehreren ersten Wicklungsabschnitten, eine Abfolge von mehreren zweiten Wicklungsabschnitten, eine weitere Abfolge von mehreren ersten Wicklungsabschnitten und eine weitere Abfolge von mehreren zweiten Wicklungsabschnitten, beispielsweise in der genannten Reihenfolge. Dabei kann die Abfolge von mehreren ersten Wicklungsabschnitten in einem ersten Satz von Nuten und die Abfolge von mehreren zweiten Wicklungsabschnitten in entgegengesetzter Richtung verlaufend in dem ersten Satz von Nuten vorgesehen sein, um den ersten Satz von Nuten vollständig aufzufüllen. In diesem Fall ist die weitere Abfolge von mehreren ersten Wicklungsabschnitten in einem zweiten Satz von Nuten und die weitere Abfolge von mehreren zweiten Wicklungsabschnitten in entgegengesetzter Richtung verlaufend in dem zweiten Satz von Nuten vorgesehen, um den zweiten Satz von Nuten vollständig aufzufüllen. Alternativ kann die Abfolge von mehreren ersten Wicklungsabschnitten in einem ersten Satz von Nuten und die Abfolge von mehreren zweiten Wicklungsabschnitten in entgegengesetzter Richtung verlaufend in einem zweiten Satz von Nuten vorgesehen sein, um den ersten Satz und den zweiten Satz von Nuten jeweils zur Hälfte aufzufüllen bzw. zu belegen. In diesem alternativen Fall ist die weitere Abfolge von mehreren ersten Wicklungsabschnitten in dem ersten Satz von Nuten und die weitere Abfolge von mehreren zweiten Wicklungsabschnitten in entgegengesetzter Richtung verlaufend in dem zweiten Satz von Nuten vorgesehen, um den ersten Satz und den zweiten Satz von Nuten vollständig zu füllen bzw. zu belegen.

Bei einem zweiten Ausführungsbeispiel gemäß dem zweiten Aspekt der Erfindung weist jeder Wicklungsstrang zwei verkürzte Umkehrverbinder-Leiterelemente und zwei unverkürzte Umkehrverbinder-Leiterelemente auf, wobei eines der verkürzten Umkehrverbinder-Leiterelemente in der obersten Nutlage und eines der unverkürzten Umkehrverbinder-Leiterelemente in der untersten Nutlage in derselben Nut eines Magnetpols angeordnet ist, oder umgekehrt. Außerdem ist das weitere verkürzte Umkehrverbinder-Leiterelement in der obersten Nutlage und das weitere unverkürzte Umkehrverbinder-Leiterelement in der untersten Nutlage, oder umgekehrt, angeordnet, und zwar in benachbarten gleichphasigen Nuten im benachbarten Magnetpol.

Weiterhin vorteilhaft ist, wenn jeder erste und/oder zweite Wicklungsabschnitt solange zwischen den gleichen zwei benachbarten Nutlagen hin- und herspringt, bis die beiden Nutlagen jeweils eine bestimmte Anzahl N mal durchlaufen sind, wobei N sich ergibt aus N=2p/a und wobei 2p die Anzahl der Magnetpole und a die Anzahl der parallelen Wicklungszweige pro Wicklungsstrang angibt. Auf diese Weise wird eine lagen- und phasensymmetrische Wicklung mit mehreren parallelen Zweigen erreicht.

Für beide Ausführungsbeispiele können die Lagen-Leiterelemente jeweils einen einzigen, in einer der Nuten liegenden Schenkel und jeweils in entgegengesetzter Umfangsrichtung abgewinkelte Enden aufweisen, wobei sich bei einer Verbindung von zwei Lagen-Leiterelementen eine bestimmte Schrittweite, insbesondere von eins auf sieben, und ein Lagensprung um eine Lage ergibt. Weiterhin können die Lagenverbinder-Leiterelemente jeweils als Lagen-Leiterelement ausgebildet sein und jeweils zwei erste Wicklungsabschnitte oder zwei zweite Wicklungsabschnitte miteinander verbinden und dabei einen Lagensprung um eine Lage ausführen.

Sehr vorteilhaft ist, wenn bei einem der Ausführungsbeispiele auf einer der beiden Stirnseiten des Stators ausschließlich Verbindungen von Leiterelementen mit derselben Schrittweite und mit einem Lagensprung um eine Lage vorgesehen sind. Auf diese Weise wird auf der einen Stirnseite des Stators ein absolut gleichmäßiger bzw. gleichförmiger bzw. symmetrischer Wickelkopf und auf der anderen Stirnseite ein im wesentlichen gleichmäßiger bzw. gleichförmiger bzw. symmetrischer Wickelkopf erreicht.

Auch vorteilhaft ist, wenn die Wicklungszweige der Wicklungsstränge jeweils zwei Enden aufweisen, an denen jeweils ein Phaseneingang oder -ausgang vorgesehen ist, wobei die Phaseneingänge- und ausgänge aller Wicklungszweige in Umfangsrichtung gesehen in einem kreissegmentförmigen Bereich von zwei benachbarten Magnetpolen angeordnet und insbesondere als Lagen-Leiterelemente ausgebildet sind.

Auf diese Weise können die Phaseneingänge- und ausgänge für die elektrischen Phasen u,v,w auf engem Bauraum und damit platzsparend untergebracht werden.

### Zeichnungen

Zwei Ausführungsbeispiele der Erfindung sind in den Zeichnungen vereinfacht dargestellt und in der nachfolgenden Beschreibung näher erläutert.
- Fig.1: zeigt eine Ansicht eines Stators einer elektrischen Maschine mit einer erfindungsgemäßen Steckwicklung,
- Fig.2: ein Wickelschema für einen der Phase u zugeordneten Wicklungsstrang 3 der erfindungsgemäßen Mehrphasenwicklung 2 nach einem ersten Ausführungsbeispiel gemäß dem ersten Aspekt der Erfindung,
- Fig.3: einen einzelnen Wicklungsabschnitt des Wicklungsstrangs nach Fig.2,
- Fig.4: ein Wickelschema für eine beispielhafte Abfolge von zwei Wicklungsabschnitten nach Fig.2,
- Fig.5: ein Wickelschema für einen Teil des Wicklungszweigs 6.1 nach Fig.2,
- Fig.6: ein verkürztes Umkehrverbinder-Leiterelement 12 der erfindungsgemäßen Steckwicklung nach Fig.1 und Fig.2 und
- Fig.7: ein Wickelschema für einen der Phase u zugeordneten Wicklungsstrang 3 der erfindungsgemäßen Mehrphasenwicklung 2 mit einem einzigen Wicklungszweig nach einem zweiten Ausführungsbeispiel gemäß dem zweiten Aspekt der Erfindung.

### Beschreibung der Ausführungsbeispiele

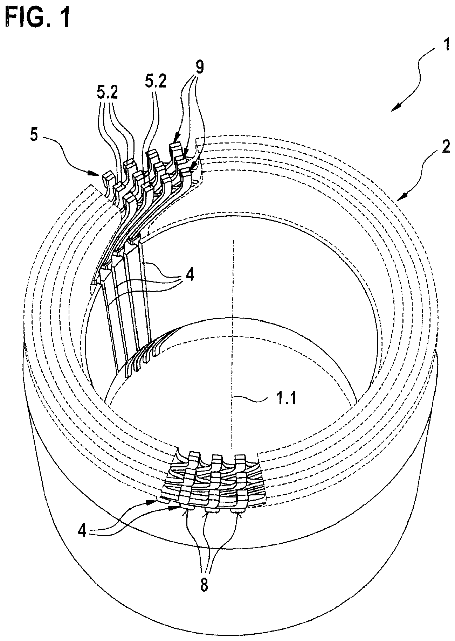

Fig.1 zeigt eine Ansicht eines Stators einer elektrischen Maschine mit einer erfindungsgemäßen Steckwicklung.

Der erfindungsgemäße Stator 1 einer elektrischen Maschine weist eine als sogenannte Steckwicklung ausgebildete Mehrphasenwicklung 2 auf, die einer bestimmten elektrischen Phase u,v,w zugeordnete Wicklungsstränge 3 umfasst. Die Wicklungsstränge 3 verlaufen jeweils wellenförmig durch im Stator 1 ausgebildete Nuten 4. Die Nuten 4 sind am Umfang des Stators 1 angeordnet und verlaufen jeweils in axialer Richtung bezüglich einer Statorachse 1.1 des Stators 1. Die Wicklungsstränge 3 sind jeweils aus verschiedenen Arten von Leiterelementen 5 gebildet. Die Mehrphasenwicklung 2 ist derart ausgebildet, dass sich eine bestimmte Lochzahl q von beispielsweise gleich zwei ergibt. Die einzelnen Leiterelemente 5 der Mehrphasenwicklung 2 sind in ihrer zugeordneten Nut 4 jeweils in einer bestimmten Nutlage zwischen einer einem Nutgrund 8 zugewandten ersten bzw. untersten Lage und einer dem Nutgrund 8 abgewandten n-ten bzw. obersten Nutlage angeordnet, wobei n der Anzahl der Leiterelemente 5 pro Nut 4 entspricht und eine gerade Zahl ist. Die einzelnen Leiterelemente 5 der Mehrphasenwicklung 2 sind jeweils an ihren Leiterenden 5.2 durch stoffschlüssige Fügeverbindungen 9, beispielsweise Schweiß- oder Lötverbindungen, derart miteinander verbunden, dass die einzelnen Wicklungsstränge 3 gebildet werden. Dazu sind die Leiterenden 5.2 der Leiterelemente 5 mittels eines sogenannten Schränkwerkzeuges entsprechend umgeformt, insbesondere abgewinkelt oder geschränkt. Die Fügeverbindungen 9 sind beispielsweise auf beiden Stirnseiten des Stators 1 vorgesehen.

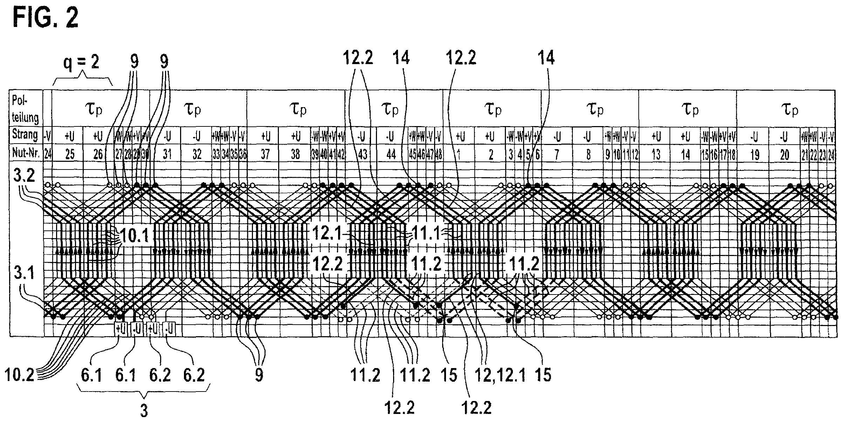

Fig.2 zeigt ein Wickelschema für einen der Phase u zugeordneten und zwei parallele Wicklungszweige 6.1,6.2 aufweisenden Wicklungsstrang 3 der erfindungsgemäßen Mehrphasenwicklung 2 nach einem ersten Ausführungsbeispiel.

In dem Wickelschema ist der Verlauf des Wicklungsstrangs 3 im Stator 1 als Linie dargestellt, wobei der erste Wicklungszweig 6.1 des Wicklungsstrangs 3 als fette Linie und der andere Wicklungszweig 6.2 des Wicklungsstrangs 3 als dünne Linie gezeichnet ist.

Die in Nuten 4 des Stators 1 verlaufenden Abschnitte des Wicklungsstrangs 3 sind senkrecht in Spalten des Wickelschemas verlaufend dargestellt. Die von den senkrecht verlaufenden Abschnitten abgewinkelten Abschnitte des Wicklungsstrangs 3 verlaufen jeweils außerhalb der Nuten 4 und sind im sogenannten Wickelkopf über die Fügeverbindungen 9 zu dem Wicklungsstrang 3 verschaltet. Bei dem ersten Ausführungsbeispiel sind Beispiel sechs Leiterschenkel 5.1 pro Nut 4 vorgesehen.

Die Fügeverbindungen 9 sind im Wickelschema als Punkt bzw. ausgefüllter Kreis dargestellt. Kreuzungen von Linien, die keine als Punkte dargestellte Fügeverbindungen 9 aufweisen, stellen ausdrücklich keine Leiterverbindung dar.

Jeder Wicklungsstrang 3 der erfindungsgemäßen Mehrphasenwicklung 2 weist zumindest eine Abfolge von mehreren unmittelbar hintereinander angeordneten ersten Wicklungsabschnitten 3.1 und zumindest eine Abfolge von mehreren unmittelbar hintereinander angeordneten, mit der Abfolge von ersten Wicklungsabschnitten 3.1 verbundenen zweiten Wicklungsabschnitten 3.2 auf. Die zweiten Wicklungsabschnitte 3.2 verlaufen bezüglich der ersten Wicklungsabschnitte 3.1 in die entgegengesetzte Umfangsrichtung. In dem Wickelschema nach Fig.2 sind die Wicklungsabschnitte, die von links nach rechts verlaufen, als erste Wicklungsabschnitte 3.1 und die Wicklungsabschnitte, die von rechts nach links verlaufen, als zweite Wicklungsabschnitte 3.2 bezeichnet.

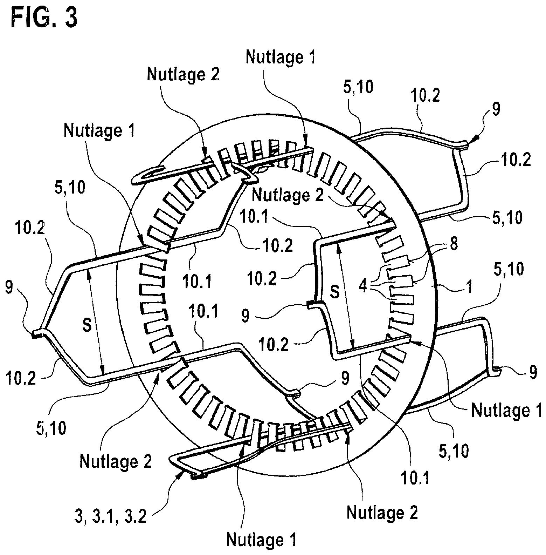

In Fig.3 ist beispielhaft ein einzelner Wicklungsabschnitt des Wicklungsstrangs nach Fig.2 gezeigt, der ein erster Wicklungsabschnitt 3.1 oder ein zweiter Wicklungsabschnitt 3.2 sein kann. In Fig. 3 ist vom Stator 1 aus Darstellungsgründen nur eine einzelne Lamelle gezeichnet.

Jeder erste und jeder zweite Wicklungsabschnitt 3.1,3.2 umfasst zwischen seinen Enden eine erste Art von Leiterelementen 5, die im folgenden als Lagen-Leiterelemente 10 bezeichnet sind. Beispielsweise sind die ersten und zweiten Wicklungsabschnitte 3.1,3.2 zwischen ihren Enden (unter Ausschluss der Enden selbst) jeweils ausschließlich aus denselben Lagen-Leiterelementen 10 gebildet. Die Lagen-Leiterelemente 10 haben jeweils einen einzigen, in einer der Nuten 4 liegenden Leiterschenkel 10.1 und jeweils in entgegengesetzter Umfangsrichtung abgewinkelte, außerhalb der Nuten 4 befindliche Leiterenden 10.2. Bei einer Verbindung von zwei Lagen-Leiterelementen 5 ergibt sich jeweils eine bestimmte Schrittweite S, beispielsweise von eins auf sieben, und ein Nutlagensprung um eine Lage. Beispielsweise bilden zwei stoffschlüssig miteinander verbundene Lagen-Leiterelemente 5 eine einzelne Welle eines der wellenförmig verlaufenden Wicklungsstränge 3.

Die Nutlage der Leiterschenkel 5.1 der Leiterelemente 5 in der jeweiligen Nut 4 ergibt sich in dem Wickelschema nach Fig.2 jeweils aus dessen Anordnung in der jeweiligen Spalte. Die unterste Nutlage ist in jeder Spalte ganz links und die oberste Nutlage ganz rechts dargestellt. Jeder Nut 4 ist im Wickelschema eine Nutnummer zugeordnet. In jedem Magnetpol τₚ des Stators 1 sind zwei benachbarte Nuten 4 ausschließlich mit Leiterelementen 5 belegt, die derselben elektrischen Phase u,v,w zugeordnet sind, so dass sich die Lochzahl q gleich zwei ergibt.

In jedem ersten Wicklungsabschnitt 3.1 und in jedem zweiten Wicklungsabschnitt 3.2 wird jeweils mehrfach zwischen den gleichen zwei benachbarten Nutlagen hin- und hergesprungen. Jeder erste und/oder zweite Wicklungsabschnitt 3.1,3.2 springt solange zwischen den gleichen zwei benachbarten Nutlagen hin- und her, bis die beiden Nutlagen jeweils eine bestimmte Anzahl N-mal durchlaufen sind, wobei sich die Anzahl N ergibt aus N=2p/a, wobei 2p die Anzahl der Magnetpole τₚ und a die Anzahl der parallelen Wicklungszweige 6 pro Wicklungsstrang 3 ist.

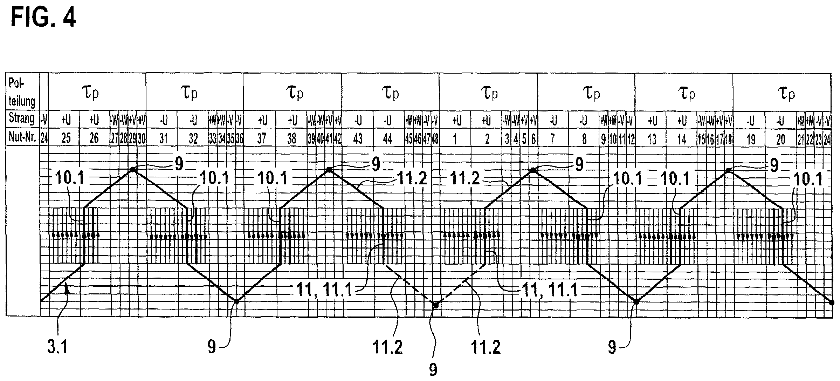

Fig.4 zeigt ein Wickelschema für eine beispielhafte Abfolge von zwei Wicklungsabschnitten, die zwei erste Wicklungsabschnitte 3.1 nach Fig.2 oder zwei zweite Wicklungsabschnitte 3.2 nach Fig.2 sein können. In dem Beispiel nach Fig.4 ist ein Wicklungsabschnitt, der zwischen den Nutlagen eins und zwei hin- und herspringt, und ein nachfolgender Wicklungsabschnitt, der zwischen den Nutlagen drei und vier hin- und herspringt, gezeigt.

Erfindungsgemäß sind in der Abfolge von mehreren ersten Wicklungsabschnitten 3.1 mehrere erste Wicklungsabschnitte 3.1 unmittelbar hintereinander angeordnet, wobei diese mehreren ersten Wicklungsabschnitte 3.1 jeweils in unterschiedlichen Nutlagen angeordnet sind. Mit anderen Worten erfolgt also von einem ersten Wicklungsabschnitt 3.1 zum nächsten ersten Wicklungsabschnitt 3.1 derselben Abfolge jeweils ein Nutlagenwechsel, in dem Beispiel nach Fig.4 beispielsweise ein Nutlagenwechsel von der Nutlage zwei in die Nutlage drei. Dieser Nutlagenwechsel wird erreicht, indem die beiden miteinander verbundenen ersten Wicklungsabschnitte 3.1 an ihren einander zugewandten Enden jeweils eine zweite Art von Leiterelement 5, das im Folgenden als Lagenverbinder-Leiterelement 11 bezeichnet wird, aufweisen. Jeder erste Wicklungsabschnitt 3.1 ist also mit einem in radialer Richtung nächst darüber oder nächst darunter liegenden ersten Wicklungsabschnitt 3.1 derselben Abfolge über eine Verbindung von zwei Lagenverbinder-Leiterelementen 11 verbunden, wobei die Verbindung von zwei Lagenverbinder-Leiterelementen 11 in Fig.2 jeweils gestrichelt dargestellt ist.

Die Lagenverbinder-Leiterelemente 11 sind beispielsweise in gleicher Weise wie die Lagen-Leiterelemente 5 ausgebildet, jedoch an ihren Leiterenden 11.2 unterschiedlich verformt bzw. geschränkt. Die Verbindung von zwei Lagenverbinder-Leiterelementen 11 bewirkt den Nutlagenwechsel um eine Lage zum zugeordneten anderen Wicklungsabschnitt 3.1. Die Abfolge von ersten Wicklungsabschnitten 3.1 verläuft beispielsweise ausgehend von den beiden untersten Nutlagen bis in die beiden obersten Nutlagen.

Die Abfolge von zweiten Wicklungsabschnitten 3.2 ist auf dieselbe Weise wie die Abfolge von ersten Wicklungsabschnitten 3.1 gebildet, so dass auch die mehreren zweiten Wicklungsabschnitte 3.2 derselben Abfolge jeweils in unterschiedlichen Nutlagen angeordnet sind und die beiden miteinander verbundenen zweiten Wicklungsabschnitte 3.2 an ihren Enden jeweils eines der Lagenverbinder-Leiterelemente 11 aufweisen. Jeder zweite Wicklungsabschnitt 3.2 ist also mit einem in radialer Richtung nächst darüber oder nächst darunter liegenden zweiten Wicklungsabschnitt 3.2 derselben Abfolge über eine Verbindung von zwei Lagenverbinder-Leiterelementen 11 verbunden. Die Abfolge von zweiten Wicklungsabschnitten 3.2 verläuft beispielsweise ausgehend von den beiden obersten Nutlagen bis in die beiden untersten Nutlagen.

Nach dem ersten Ausführungsbeispiel umfasst jeder Wicklungsstrang 3 eine bestimmte Anzahl von parallelen Wicklungszweigen 6, beispielsweise von zwei parallelen Wicklungszweigen 6. Dabei ist vorgesehen, dass jeder parallele Wicklungszweig 6 eine einzige Abfolge von mehreren ersten Wicklungsabschnitten 3.1 und eine einzige Abfolge von mehreren zweiten Wicklungsabschnitten 3.2 umfasst.

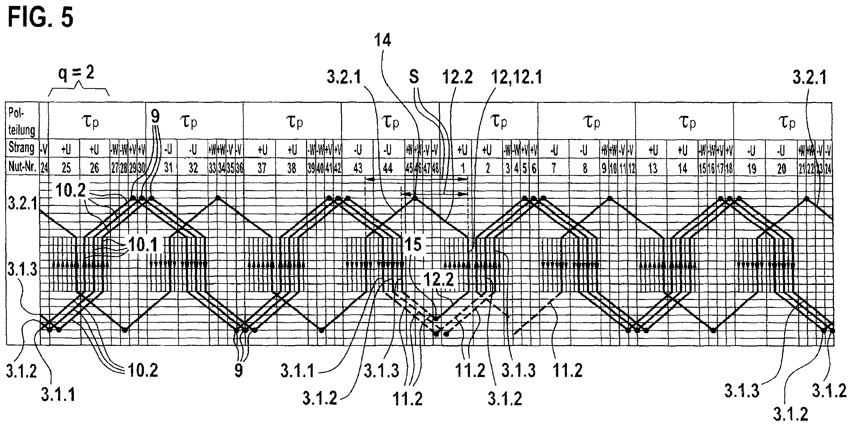

Fig.5 zeigt ein Wickelschema für einen Teil des Wicklungszweigs 6.1 nach Fig.2, nämlich eine vollständige Abfolge von drei ersten Wicklungsabschnitten 3.1.1,3.1.2,3.1.3 nach Fig.2 und einen zweiten Wicklungsabschnitt 3.2.1 als Teil der in Fig.2 gezeigten Abfolge von mehreren zweiten Wicklungsabschnitten 3.2. Um in jeder Spalte die Nutlage schneller erfassen zu können, sind in jeder eine Nutnummer aufweisenden Spalte nicht mit Leitern belegte Nutlagen mit einem gepfeilten Strich versehen.

Erfindungsgemäß ist der in radialer Richtung gesehen oberste erste Wicklungsabschnitt 3.1.3 eines Wicklungszweigs 6 jeweils über eine dritte Art von Leiterelement 5, das im Folgenden als Umkehrverbinder-Leiterelement 12 bezeichnet wird, mit einem in radialer Richtung gesehen obersten zweiten Wicklungsabschnitt 3.2.1 desselben Wicklungszweigs 6 derart verbunden, dass der oberste zweite Wicklungsabschnitt 3.2.1 gegenüber dem obersten ersten Wicklungsabschnitt 3.1.3 bzw. die Abfolge von zweiten Wicklungsabschnitten 3.2 gegenüber der Abfolge von ersten Wicklungsabschnitten 3.1 in die entgegengesetzte Umfangsrichtung verläuft. Das Umkehrverbinder-Leiterelement 12 ist dabei mit einem Umkehrschenkel 12.1 in der obersten Nutlage vorgesehen.

Das Lagen-Leiterelement 5, das das dem Umkehrverbinder-Leiterelement 12 zugewandte Ende des ersten Wicklungsabschnittes 3.1 bildet, ist ebenfalls in der obersten Nutlage vorgesehen.

Außerdem ist der in radialer Richtung gesehen unterste erste Wicklungsabschnitt 3.1 eines Wicklungsstrangs 3 bzw. Wicklungszweigs 6 jeweils über eines der Umkehrverbinder-Leiterelemente 12 mit einem untersten zweiten Wicklungsabschnitt 3.2 desselben Wicklungsstrangs 3 bzw. Wicklungszweigs 6 derart verbunden, dass der unterste zweite Wicklungsabschnitt 3.2 gegenüber dem untersten ersten Wicklungsabschnitt 3. bzw. die Abfolge von zweiten Wicklungsabschnitten 3.2 gegenüber der Abfolge von ersten Wicklungsabschnitten 3.1 in die entgegengesetzte Umfangsrichtung verläuft. Das Umkehrverbinder-Leiterelement 12 ist dabei mit einem Umkehrschenkel 12.1 in der untersten Nutlage vorgesehen.

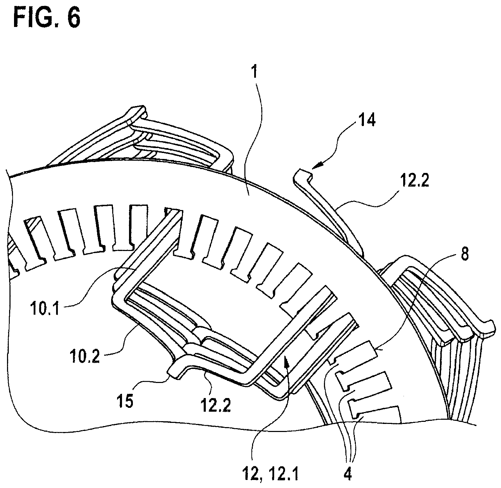

Fig.6 zeigt ein verkürztes Umkehrverbinder-Leiterelement 12 der erfindungsgemäßen Steckwicklung nach Fig.1 und Fig.2. In Fig. 6 ist vom Stator 1 aus Darstellungsgründen nur eine einzelne Lamelle gezeichnet.

Die Umkehrschenkel 12.1 der Umkehrverbinder-Leiterelemente 12 haben jeweils beidseitig aus der jeweiligen Nut 4 vorstehende Verbindungsabschnitte 12.2, die von derselben Richtung bzw. von derselben Stirnseite des Stators 1 aus betrachtet bezüglich der Statorachse 1.1 in die gleiche Umfangsrichtung verlaufen. Beispielsweise haben die Umkehrverbinder-Leiterelemente 12 jeweils nur einen einzigen in einer der Nuten 4 liegenden Schenkel 12.1. Alternativ könnten die Umkehrverbinder-Leiterelemente 12 beispielsweise auch U-förmig ausgeführt sein und jeweils zwei in Nuten 4 liegende Schenkel aufweisen.

Nach dem Wickelschema in Fig.2 und Fig.5 sind die Umkehrschenkel 12.1 der Umkehrverbinder-Leiterelemente 12 jeweils an ihren beiden Verbindungsabschnitten 12.2 auf der einen Seite über eine erste Umkehrverbindung 14 mit einem in einer anderen Nutlage liegenden Leiterschenkel 5.1 eines der ersten Wicklungsabschnitte 3.1 und auf der anderen Seite über eine zweite Umkehrverbindung 15 mit einem in der gleichen Nutlage liegenden Leiterschenkel 5.1 eines der zweiten Wicklungsabschnitte 3.2 verbunden, wobei die Schrittweite der zweiten Umkehrverbindung 15 gegenüber der Schrittweite der ersten Umkehrverbindung 14 nach dem ersten Ausführungsbeispiel um eine Nut verschieden, beispielsweise um eine Nut verkürzt ist.

Die mehreren ersten Wicklungsabschnitte 3.1 eines ersten Wicklungszweigs 6.1 sind jeweils in einem ersten Satz von Nuten 4 mit den Nutnummern 26,32,38,44,2,8,14,20 und die mehreren zweiten Wicklungsabschnitte 3.2 desselben ersten Wicklungszweigs 6.1 sind jeweils in einem zweiten Satz von Nuten 4 mit den Nutnummern 25,31,37,43,1,7,13,19 vorgesehen. Die beiden Sätze von Nuten 4 sind in dem Wickelschema nach Fig.2 als Spalten dargestellt, die breiter sind als die übrigen Spalten.

Der erste Satz von Nuten 4 ist gegenüber dem zweiten Satz von Nuten 4 jeweils um eine Nut versetzt. Die mehreren ersten Wicklungsabschnitte 3.1 eines parallelen zweiten Wicklungszweigs 6.2 desselben Wicklungsstrangs 3 sind nach dem ersten Ausführungsbeispiel in Fig.2 jeweils in dem ersten Satz von Nuten 4 und die mehreren zweiten Wicklungsabschnitte 3.2 desselben zweiten Wicklungszweigs 6.2 jeweils in dem zweiten Satz von Nuten 4 vorgesehen. Dabei ist für jeden Wicklungszweig 6.1,6.2 der jeweils oberste erste Wicklungsabschnitt 3.1 über ein Umkehrverbinder-Leiterelement 12 mit einem obersten zweiten Wicklungsabschnitt 3.2 und der jeweils unterste erste Wicklungsabschnitt 3.1 über ein weiteres Umkehrverbinder-Leiterelement 12 mit einem untersten zweiten Wicklungsabschnitt 3.2 verbunden.

Nach dem ersten Ausführungsbeispiel in Fig.2 weist jeder Wicklungszweig 6.1,6.2 zwei Umkehrverbinder-Leiterelemente 12 auf, von denen das eine Umkehrverbinder-Leiterelement 12 in einer der gleichphasigen Nuten 4 eines der Magnetpole τₚ in der obersten Nutlage und das andere Umkehrverbinder-Leiterelement 12 in der untersten Nutlage der anderen gleichphasigen Nut 4 desselben Magnetpols τₚ angeordnet ist, oder umgekehrt. Wenn die Wicklungsstränge 3 wie im ersten Ausführungsbeispiel nach Fig.2 jeweils ein Paar von parallelen Wicklungszweigen 6.1,6.2 aufweisen, werden die Umkehrverbinder-Leiterelemente 12 des einen Wicklungszweiges 6.1 in einem ersten Magnetpols τₚ in der zuvor beschriebenen Nutlage und Nut und die Umkehrverbinder-Leiterelemente 12 des anderen Wicklungszweiges 6.2 in einem zum ersten Magnetpol τₚ benachbarten zweiten Magnetpol τₚ in der zuvor beschriebenen Nutlage und Nut angeordnet. Wenn die Wicklungsstränge 3 jeweils zwei Paare von Wicklungszweigen 6 aufweisen, werden die Umkehrverbinder-Leiterelemente 12 des ersten Paares von parallelen Wicklungszweigen 6 wie zuvor beschrieben in den entsprechenden gleichphasigen Nuten zweier benachbarter erster Magnetpole τₚ und die Umkehrverbinder-Leiterelemente 12 des zweiten Paares von parallelen Wicklungszweigen 6 wie zuvor beschrieben in den entsprechenden gleichphasigen Nuten zweier benachbarter, um 180 Grad zu den benachbarten ersten Magnetpolen τₚ versetzter Magnetpole τₚ angeordnet. Wenn der Wicklungsstrang 3 vier Paare von Wicklungszweigen 6 aufweist, werden die Umkehrverbinder-Leiterelemente 12 des ersten Paares von parallelen Wicklungszweigen 6 in den entsprechenden gleichphasigen Nuten 4 zweier benachbarter erster Magnetpole τₚ und die Umkehrverbinder-Leiterelemente 12 des zweiten, dritten und vierten Paares von parallelen Wicklungszweigen 6 wie zuvor beschrieben in den entsprechenden gleichphasigen Nuten zweier benachbarter, um 90 bzw. 180 bzw. 270 Grad zu den benachbarten ersten Magnetpolen τₚ versetzter Magnetpole τₚ angeordnet.

Auf einer der beiden Stirnseiten des Stators 1 sind ausschließlich Verbindungen von Leiterelementen 5 mit einem Lagensprung um eine Nutlage und mit derselben Schrittweite S vorgesehen. Dadurch wird auf dieser Stirnseite des Stators ein absolut gleichmäßiger bzw. gleichförmiger bzw. symmetrischer Wickelkopf erzeugt.

Die parallelen Wicklungszweige 6 der Wicklungsstränge 3 haben nach Fig.2 jeweils zwei Enden, an denen jeweils ein Phaseneingang oder -ausgang +U,-U, +V,-V, +W,-W vorgesehen ist, wobei die Phaseneingänge- und ausgänge +U,-U, +V,-V, +W,-W aller Wicklungszweige 3 in Umfangsrichtung des Stators 1 gesehen in einem kreissegmentförmigen Bereich von zwei benachbarten Magnetpolen τₚ angeordnet und als Anschluss-Leiterelemente 17 ausgebildet sind. Beispielsweise sind die Anschluss-Leiterelemente 17 wie die Lagen-Leiterelemente 10 ausgeführt.

Die Phaseneingänge- und ausgänge U,-U, +V,-V, +W,-W können an einer beliebigen Stelle des jeweiligen Wicklungsstrangs 3 vorgesehen sein, indem eine der Fügeverbindungen 9, die einen Nutlagenwechsel um eine Lage ausführt und beispielsweise zwei Lagen-Leiterelemente 10 verbinden würde, nicht hergestellt wird und die Verbindungsabschnitte 10.2 der entsprechenden Leiterelemente 10 an einer der elektrischen Phasen u,v,w angeschlossen wird.

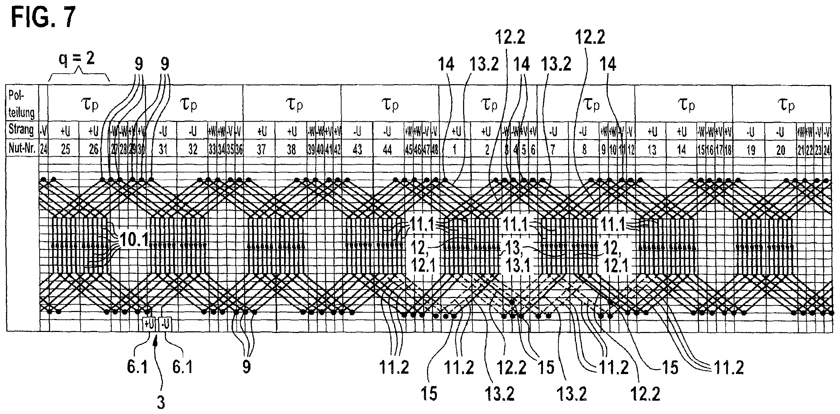

Fig.7 zeigt ein Wickelschema für einen der Phase u zugeordneten Wicklungsstrang 3 der erfindungsgemäßen Mehrphasenwicklung 2 mit einem einzigen Wicklungszweig nach einem zweiten Ausführungsbeispiel.

Bei dem zweiten Ausführungsbeispiel sind wie im ersten Ausführungsbeispiel beispielsweise sechs Leiterschenkel 5.1 pro Nut 4 vorgesehen.

Das zweite Ausführungsbeispiel weist im Gegensatz zu dem ersten

Ausführungsbeispiel Wicklungsstränge 3 ohne parallele Wicklungszweige 6 auf. Jeder Wicklungsstrang 3 umfasst daher nur einen einzigen Wicklungszweig 6. Dieser einzige Wicklungszweig 6 eines jeden Wicklungsstrangs 3 umfasst eine Abfolge von mehreren ersten Wicklungsabschnitten 3.1, eine Abfolge von mehreren zweiten Wicklungsabschnitten 3.2, eine weitere Abfolge von mehreren ersten Wicklungsabschnitten 3.1 und eine weitere Abfolge von mehreren zweiten Wicklungsabschnitten 3.2, beispielsweise in dieser genannten Reihenfolge. Die ersten Wicklungsabschnitte 3.1 und die zweiten Wicklungsabschnitte 3.2 gemäß dem zweiten Ausführungsbeispiel sind wie im ersten Ausführungsbeispiel ausgebildet.

Die Abfolge von mehreren ersten Wicklungsabschnitten 3.1 ist nach Fig.7 in dem ersten Satz von Nuten 4 und die Abfolge von mehreren zweiten Wicklungsabschnitten 3.2 in entgegengesetzter Richtung verlaufend in dem zweiten Satz von Nuten 4 und nachfolgend die weitere Abfolge von mehreren ersten Wicklungsabschnitten 3.1 in dem ersten Satz von Nuten 4 und die weitere Abfolge von mehreren zweiten Wicklungsabschnitten 3.2 in entgegengesetzter Richtung verlaufend in dem zweiten Satz von Nuten 4 vorgesehen. Bei diesem alternativen Verlauf des einzigen Wicklungszweigs 6 pro Wicklungsstrang 3 ist die Abfolge von mehreren ersten Wicklungsabschnitten 3.1 über ein verkürztes Umkehrverbinder-Leiterelement 13 mit der Abfolge von mehreren zweiten Wicklungsabschnitten 3.2 verbunden. Die Abfolge von mehreren zweiten Wicklungsabschnitten 3.2 ist mit der weiteren Abfolge von mehreren ersten Wicklungsabschnitten 3.1 über ein unverkürztes Umkehrverbinder-Leiterelement 12 verbunden. Weiterhin ist die weitere Abfolge von mehreren ersten Wicklungsabschnitten 3.1 mit der weiteren Abfolge von mehreren zweiten Wicklungsabschnitten 3.2 über ein verkürztes Umkehrverbinder-Leiterelement 13 verbunden. Außerdem ist die weitere Abfolge von mehreren zweiten Wicklungsabschnitten 3.2 über ein unverkürztes Umkehrverbinder-Leiterelement 12 mit der Abfolge von mehreren ersten Wicklungsabschnitten 3.1 verbunden.

Alternativ kann vorgesehen sein, die Abfolge von mehreren ersten Wicklungsabschnitten 3.1 in einem ersten Satz von Nuten 4, beispielsweise mit den Nutnummern 26,32,38,44,2,8,14,20, und die Abfolge von mehreren zweiten Wicklungsabschnitten 3.2 in entgegengesetzter Richtung verlaufend in demselben ersten Satz von Nuten 4 mit den Nutnummern 26,32,38,44,2,8,14,20 und nachfolgend die weitere Abfolge von mehreren ersten Wicklungsabschnitten 3.1 in einem zweiten Satz von Nuten 4, beispielsweise mit den Nutnummern 25,31,37,43,1,7,13,19, und die weitere Abfolge von mehreren zweiten Wicklungsabschnitten 3.2 in entgegengesetzter Richtung verlaufend in demselben zweiten Satz von Nuten 4 verlaufen zu lassen. Bei diesem Verlauf des einzigen Wicklungszweigs 6 pro Wicklungsstrang 3 ist die Abfolge von mehreren ersten Wicklungsabschnitten 3.1 über ein unverkürztes Umkehrverbinder-Leiterelement 12 mit der Abfolge von mehreren zweiten Wicklungsabschnitten 3.2 verbunden. Die Abfolge von mehreren zweiten Wicklungsabschnitten 3.2 ist mit der weiteren Abfolge von mehreren ersten Wicklungsabschnitten 3.1 über ein verkürztes Umkehrverbinder-Leiterelement 13 verbunden. Weiterhin ist die weitere Abfolge von mehreren ersten Wicklungsabschnitten 3.1 mit der weiteren Abfolge von mehreren zweiten Wicklungsabschnitten 3.2 über ein unverkürztes Umkehrverbinder-Leiterelement 12 verbunden. Außerdem ist die weitere Abfolge von mehreren zweiten Wicklungsabschnitten 3.2 über ein verkürztes Umkehrverbinder-Leiterelement 13 mit der Abfolge von mehreren ersten Wicklungsabschnitten 3.1 verbunden.

Jeder einzige Wicklungszweig pro Wicklungsstrang 3 weist zwei verkürzte Umkehrverbinder-Leiterelemente 12 und zwei unverkürzte Umkehrverbinder-Leiterelemente 13 auf. Dabei ist eines der verkürzten Umkehrverbinder-Leiterelemente 12 in der obersten Nutlage und eines der unverkürzten Umkehrverbinder-Leiterelemente 13 in der untersten Nutlage angeordnet, oder umgekehrt, und zwar in derselben Nut, beispielsweise mit der Nutnummer 2, eines Magnetpols τₚ. Weiterhin ist das weitere verkürzte Umkehrverbinder-Leiterelement 12 in der obersten Nutlage und das weitere unverkürzte Umkehrverbinder-Leiterelement 13 in der untersten Nutlage angeordnet, oder umgekehrt, und zwar in benachbarten gleichphasigen Nuten, beispielsweise mit der Nutnummer 7 und 8, des benachbarten Magnetpols (τₚ).

Darüber hinaus sind die Wicklungsstränge 3 in gleicher Weise wie im ersten Ausführungsbeispiel ausgebildet und angeordnet.

Der einzige Wicklungszweig 6 pro Wicklungsstrang 3 hat nach Fig.7 jeweils zwei Enden, an denen jeweils ein Phaseneingang oder -ausgang +U,-U, +V,-V, +W,-W vorgesehen ist, wobei die Phaseneingänge- und ausgänge +U,-U, +V,-V, +W,-W aller Wicklungszweige 3 in Umfangsrichtung des Stators 1 gesehen in einem kreissegmentförmigen Bereich von zwei benachbarten Magnetpolen τₚ angeordnet und insbesondere als Lagen-Leiterelemente 10 ausgebildet sind.

Die Phaseneingänge- und ausgänge U,-U, +V,-V, +W,-W können an einer beliebigen Stelle des jeweiligen Wicklungsstrangs 3 vorgesehen sein, indem eine der Fügeverbindungen 9, die einen Nutlagenwechsel um eine Lage ausführt und beispielsweise zwei Lagen-Leiterelemente 10 verbinden würde, nicht hergestellt wird und die Verbindungsabschnitte 10.2 der entsprechenden Leiterelemente 10 an einer der elektrischen Phasen u,v,w angeschlossen wird.

## Patentansprüche

1. Stator (1) für eine elektrische Maschine, mit einer als Steckwicklung ausgebildeten Mehrphasenwicklung, die einer bestimmten elektrischen Phase (u,v,w) zugeordnete Wicklungsstränge (3) aufweist, die jeweils wellenförmig durch im Stator (1) ausgebildete Nuten (4) verlaufen und jeweils aus verschiedenen Arten von Leiterelementen (5,10,11,12) gebildet sind, und mit einer Lochzahl (q) von insbesondere zwei,
- wobei die Leiterelemente (5,10,11,12) in der jeweiligen Nut (4) in einer bestimmten Nutlage zwischen einer einem Nutgrund zugewandten ersten bzw. untersten Lage und einer dem Nutgrund abgewandten n-ten bzw. obersten Nutlage angeordnet sind, wobei n der Anzahl der Leiterelemente (5,10,11,12) pro Nut (4) entspricht, eine gerade Zahl ist und zumindest vier beträgt, wobei die Leiterelemente (5,10,11,12) jeweils durch stoffschlüssige Fügeverbindungen (9) zur Bildung des jeweiligen Wicklungsstrangs (3) miteinander verbunden sind, insbesondere auf beiden Stirnseiten des Stators (1),
- jeder Wicklungsstrang (3) eine Abfolge von mehreren ersten Wicklungsabschnitten (3.1) und eine Abfolge von mehreren, mit der Abfolge von ersten Wicklungsabschnitten (3.1) verbundenen zweiten Wicklungsabschnitten (3.2) aufweist, wobei in jedem ersten Wicklungsabschnitt (3.1) und in jedem zweiten Wicklungsabschnitt (3.2) jeweils zwischen den gleichen zwei benachbarten Nutlagen hin- und hergesprungen wird,
- wobei jeder erste und zweite Wicklungsabschnitt (3.1,3.2) zwischen seinen Enden Lagen-Leiterelemente (10) umfasst,
- wobei jeder erste bzw. zweite Wicklungsabschnitt (3.1,3.2) bezüglich der Nutlage mit dem nächst darüber oder nächst darunter liegenden ersten bzw. zweiten Wicklungsabschnitt (3.1,3.2) über eine Verbindung von zwei Lagenverbinder-Leiterelementen (11) verbunden ist,
- wobei die bezüglich der Nutlage obersten bzw. untersten ersten Wicklungsabschnitte (3.1,3.2) jeweils über ein Umkehrverbinder-Leiterelement (12) mit einem der obersten bzw. untersten zweiten Wicklungsabschnitte (3.2) derart verbunden sind, dass die Abfolge von zweiten Wicklungsabschnitten (3.2) gegenüber der Abfolge von ersten Wicklungsabschnitten (3.1) in die entgegengesetzte Umfangsrichtung verläuft, wobei die Umkehrverbinder-Leiterelemente (12,13) jeweils einen in der obersten oder untersten Nutlage liegenden Umkehrschenkel (12.1,13.1) aufweisen, dessen beidseitig aus der jeweiligen Nut (4) vorstehende Verbindungsabschnitte (12.2,13.2) von derselben Stirnseite des Stators (1) aus betrachtet bezüglich der Statorachse (1.1) in die gleiche Umfangsrichtung verlaufen und der insbesondere der einzige, in einer der Nuten (4) liegende Schenkel des Umkehrverbinder-Leiterelementes (12,13) ist, **dadurch gekennzeichnet, dass**
- die Umkehrschenkel (12.1,13.1) der Umkehrverbinder-Leiterelemente (12,13) jeweils an ihren beiden Verbindungsabschnitten (12.2,13.2) auf der einen Seite über eine erste Umkehrverbindung (14) mit einem in einer zweitobersten oder zweituntersten Nutlage liegenden Leiterschenkel eines obersten bzw. untersten Wicklungsabschnitts (3.1,3.2) und auf der anderen Seite über eine zweite Umkehrverbindung (15) mit einem in der gleichen Nutlage liegenden Leiterschenkel eines obersten bzw. untersten Wicklungsabschnitts (3.1,3.2) verbunden sind, wobei die Schrittweite (S) der zweiten Umkehrverbindung (15) gegenüber der Schrittweite (S) der ersten Umkehrverbindung (14) bei einem verkürzten Umkehrverbinder-Leiterelement (12) um eine Nut (4) verschieden, insbesondere kleiner, und bei einem unverkürzten Umkehrverbinder-Leiterelement (13) gleich ist, wobei
- jeder Wicklungsstrang (3) eine Anzahl von zumindest zwei parallelen Wicklungszweigen (6,6.1,6.2) aufweist, wobei jeder parallele Wicklungszweig (6) eine einzige Abfolge von mehreren ersten Wicklungsabschnitten (3.1) und eine einzige Abfolge von mehreren zweiten Wicklungsabschnitten (3.2) umfasst.

2. Stator nach Anspruch 1, **dadurch gekennzeichnet, dass** eine Abfolge von mehreren ersten Wicklungsabschnitten (3.1) eines ersten Wicklungszweigs (6.1) jeweils in einem ersten Satz von Nuten (4) und eine Abfolge von mehreren zweiten Wicklungsabschnitten (3.2) desselben ersten Wicklungszweigs (6.1) jeweils in einem zweiten Satz von Nuten (4) vorgesehen sind, wobei der erste Satz von Nuten (4) gegenüber dem zweiten Satz von Nuten (4) jeweils um eine Nut (4) versetzt ist, wobei eine Abfolge von mehreren ersten Wicklungsabschnitten (3.1) eines parallelen zweiten Wicklungszweigs (6.2) desselben Wicklungsstrangs (3) jeweils in dem ersten Satz von Nuten (4) und eine Abfolge von mehreren zweiten Wicklungsabschnitten (3.2) desselben zweiten Wicklungszweigs (6.2) jeweils in dem zweiten Satz von Nuten (4) vorgesehen sind, wobei für jeden Wicklungszweig (6.1,6.2) der jeweils oberste erste bzw. zweite Wicklungsabschnitt (3.1,3.2) über ein verkürztes Umkehrverbinder-Leiterelement (12) mit einem obersten zweiten bzw. ersten Wicklungsabschnitt (3.2, 3.1) und der jeweils unterste erste bzw. zweite Wicklungsabschnitt (3.1,3.2) über ein weiteres verkürztes Umkehrverbinder-Leiterelement (12) mit einem untersten zweiten bzw. ersten Wicklungsabschnitt (3.2,3.1) verbunden ist.

3. Stator nach einem der Ansprüche 1 oder 2, **dadurch gekennzeichnet, dass** jeder Wicklungszweig (3.1,3.2) zwei verkürzte Umkehrverbinder-Leiterelemente (12) aufweist, von denen das eine verkürzte Umkehrverbinder-Leiterelement (12) in einer der gleichphasigen Nuten (4) eines Magnetpols (τₚ) in der obersten Nutlage und das andere verkürzte Umkehrverbinder-Leiterelement (12) in der untersten Nutlage der anderen gleichphasigen Nut (4) desselben Magnetpols (τₚ) angeordnet ist, oder umgekehrt.

4. Stator nach Anspruch 3, **dadurch gekennzeichnet, dass** der Wicklungsstrang (3) ein Paar von parallelen Wicklungszweigen (6,6.1,6.2) aufweist, wobei die verkürzten Umkehrverbinder-Leiterelemente (12) des einen Wicklungszweiges (6.1) in der entsprechenden Nutlage der entsprechenden gleichphasigen Nuten eines ersten Magnetpols (τₚ) und die verkürzten Umkehrverbinder-Leiterelemente (12) des anderen Wicklungszweiges (6.2) in der entsprechenden Nutlage der entsprechenden gleichphasigen Nuten (4) eines zum ersten Magnetpol (τₚ) benachbarten zweiten Magnetpols (τₚ) angeordnet sind, oder dass der Wicklungsstrang (3) zwei Paare von Wicklungszweigen (6) aufweist, wobei die verkürzten Umkehrverbinder-Leiterelemente (12) des ersten Paares von parallelen Wicklungszweigen (6) in den entsprechenden gleichphasigen Nuten (4) zweier benachbarter erster Magnetpole (τₚ) und die verkürzten Umkehrverbinder-Leiterelemente (12) des zweiten Paares von parallelen Wicklungszweigen (6) in den entsprechenden gleichphasigen Nuten (4) zweier benachbarter, um 180 Grad zu den benachbarten ersten Magnetpolen (τₚ) versetzter Magnetpole (τₚ) angeordnet sind, oder dass der Wicklungsstrang (3) vier Paare von Wicklungszweigen (6) aufweist, wobei die verkürzten Umkehrverbinder-Leiterelemente (12) des ersten Paares von parallelen Wicklungszweigen (6) in den entsprechenden gleichphasigen Nuten zweier benachbarter erster Magnetpole (τₚ) und die verkürzten Umkehrverbinder-Leiterelemente (12) des zweiten, dritten und vierten Paares von parallelen Wicklungszweigen (6) in den entsprechenden gleichphasigen Nuten (4) zweier benachbarter, um 90 bzw. 180 bzw. 270 Grad zu den benachbarten ersten Magnetpolen (τₚ) versetzter Magnetpole (τₚ) angeordnet sind.

5. Stator (1) für eine elektrische Maschine, mit einer als Steckwicklung ausgebildeten Mehrphasenwicklung, die einer bestimmten elektrischen Phase (u,v,w) zugeordnete Wicklungsstränge (3) aufweist, die jeweils wellenförmig durch im Stator (1) ausgebildete Nuten (4) verlaufen und jeweils aus verschiedenen Arten von Leiterelementen (5,10,11,12) gebildet sind, und mit einer Lochzahl (q) von insbesondere zwei,
- wobei die Leiterelemente (5,10,11,12) in der jeweiligen Nut (4) in einer bestimmten Nutlage zwischen einer einem Nutgrund zugewandten ersten bzw. untersten Lage und einer dem Nutgrund abgewandten n-ten bzw. obersten Nutlage angeordnet sind, wobei n der Anzahl der Leiterelemente (5,10,11,12) pro Nut (4) entspricht, eine gerade Zahl ist und zumindest vier beträgt, wobei die Leiterelemente (5,10,11,12) jeweils durch stoffschlüssige Fügeverbindungen (9) zur Bildung des jeweiligen Wicklungsstrangs (3) miteinander verbunden sind, insbesondere auf beiden Stirnseiten des Stators (1),
- jeder Wicklungsstrang (3) eine Abfolge von mehreren ersten Wicklungsabschnitten (3.1) und eine Abfolge von mehreren, mit der Abfolge von ersten Wicklungsabschnitten (3.1) verbundenen zweiten Wicklungsabschnitten (3.2) aufweist, wobei in jedem ersten Wicklungsabschnitt (3.1) und in jedem zweiten Wicklungsabschnitt (3.2) jeweils zwischen den gleichen zwei benachbarten Nutlagen hin- und hergesprungen wird,
- wobei jeder erste und zweite Wicklungsabschnitt (3.1,3.2) zwischen seinen Enden Lagen-Leiterelemente (10) umfasst,
- wobei jeder erste bzw. zweite Wicklungsabschnitt (3.1,3.2) bezüglich der Nutlage mit dem nächst darüber oder nächst darunter liegenden ersten bzw. zweiten Wicklungsabschnitt (3.1,3.2) über eine Verbindung von zwei Lagenverbinder-Leiterelementen (11) verbunden ist,
- wobei die bezüglich der Nutlage obersten bzw. untersten ersten Wicklungsabschnitte (3.1,3.2) jeweils über ein Umkehrverbinder-Leiterelement (12) mit einem der obersten bzw. untersten zweiten Wicklungsabschnitte (3.2) derart verbunden sind, dass die Abfolge von zweiten Wicklungsabschnitten (3.2) gegenüber der Abfolge von ersten Wicklungsabschnitten (3.1) in die entgegengesetzte Umfangsrichtung verläuft, wobei die Umkehrverbinder-Leiterelemente (12,13) jeweils einen in der obersten oder untersten Nutlage liegenden Umkehrschenkel (12.1,13.1) aufweisen, dessen beidseitig aus der jeweiligen Nut (4) vorstehende Verbindungsabschnitte (12.2,13.2) von derselben Stirnseite des Stators (1) aus betrachtet bezüglich der Statorachse (1.1) in die gleiche Umfangsrichtung verlaufen und der insbesondere der einzige, in einer der Nuten (4) liegende Schenkel des Umkehrverbinder-Leiterelementes (12,13) ist, **dadurch gekennzeichnet, dass**
- jeder Wicklungsstrang (3) einen einzigen Wicklungszweig (6) aufweist, wobei der einzige Wicklungszweig (6) eine Abfolge von mehreren ersten Wicklungsabschnitten (3.1), eine Abfolge von mehreren zweiten Wicklungsabschnitten (3.2), eine weitere Abfolge von mehreren ersten Wicklungsabschnitten (3.1) und eine weitere Abfolge von mehreren zweiten Wicklungsabschnitten (3.2) umfasst, insbesondere in der genannten Reihenfolge.

6. Stator nach Anspruch 5, **dadurch gekennzeichnet, dass** die Abfolge von mehreren ersten Wicklungsabschnitten (3.1) in einem ersten Satz von Nuten (4) und die Abfolge von mehreren zweiten Wicklungsabschnitten (3.2) in entgegengesetzter Richtung verlaufend in dem ersten Satz von Nuten (4) und nachfolgend die weitere Abfolge von mehreren ersten Wicklungsabschnitten (3.1) in einem zweiten Satz von Nuten (4) und die weitere Abfolge von mehreren zweiten Wicklungsabschnitten (3.2) in entgegengesetzter Richtung verlaufend in dem zweiten Satz von Nuten (4) vorgesehen ist.

7. Stator nach Anspruch 5, **dadurch gekennzeichnet, dass** die Abfolge von mehreren ersten Wicklungsabschnitten (3.1) in einem ersten Satz von Nuten (4) und die Abfolge von mehreren zweiten Wicklungsabschnitten (3.2) in entgegengesetzter Richtung verlaufend in einem zweiten Satz von Nuten (4) und nachfolgend die weitere Abfolge von mehreren ersten Wicklungsabschnitten (3.1) in dem ersten Satz von Nuten (4) und die weitere Abfolge von mehreren zweiten Wicklungsabschnitten (3.2) in entgegengesetzter Richtung verlaufend in dem zweiten Satz von Nuten (4) vorgesehen ist.

8. Stator nach Anspruch 6, **dadurch gekennzeichnet, dass** die Abfolge von mehreren ersten Wicklungsabschnitten (3.1) eines Wicklungsstrangs (3) über ein unverkürztes Umkehrverbinder-Leiterelement (12) mit der Abfolge von mehreren zweiten Wicklungsabschnitten (3.2) verbunden ist, wobei die Abfolge von mehreren zweiten Wicklungsabschnitten (3.2) mit der weiteren Abfolge von mehreren ersten Wicklungsabschnitten (3.1) über ein verkürztes Umkehrverbinder-Leiterelement (13) verbunden ist, wobei die weitere Abfolge von mehreren ersten Wicklungsabschnitten (3.1) mit der weiteren Abfolge von mehreren zweiten Wicklungsabschnitten (3.2) über ein unverkürztes Umkehrverbinder-Leiterelement (12) verbunden ist und wobei die weitere Abfolge von mehreren zweiten Wicklungsabschnitten (3.2) über ein verkürztes Umkehrverbinder-Leiterelement (13) mit der Abfolge von mehreren ersten Wicklungsabschnitten (3.1) verbunden ist.

9. Stator nach einem der Ansprüche 5 bis 8, **dadurch gekennzeichnet, dass** jeder Wicklungsstrang (3) zwei verkürzte Umkehrverbinder-Leiterelemente (12) und zwei unverkürzte Umkehrverbinder-Leiterelemente (13) aufweist, wobei eines der verkürzten Umkehrverbinder-Leiterelemente (12) in der obersten Nutlage und eines der unverkürzten Umkehrverbinder-Leiterelemente (13) in der untersten Nutlage in derselben Nut eines Magnetpols (τₚ) angeordnet ist, oder umgekehrt, und wobei das weitere verkürzte Umkehrverbinder-Leiterelement (12) in der obersten Nutlage und das weitere unverkürzte Umkehrverbinder-Leiterelement (13) in der untersten Nutlage, oder umgekehrt, in benachbarten gleichphasigen Nuten des benachbarten Magnetpols (τₚ) angeordnet ist.

10. Stator nach einem der vorhergehenden Ansprüche, **dadurch gekennzeichnet, dass** jeder erste und/oder zweite Wicklungsabschnitt (3.1,3.2) solange zwischen den gleichen zwei benachbarten Nutlagen hin- und herspringt, bis die beiden Nutlagen jeweils eine bestimmte Anzahl N mal durchlaufen sind, wobei N sich ergibt aus N=2p/a, wobei 2p die Anzahl der Magnetpole (τₚ) und a die Anzahl der parallelen Wicklungszweige (6) pro Wicklungsstrang (3) ist.

11. Stator nach einem der vorhergehenden Ansprüche, **dadurch gekennzeichnet, dass** die Lagen-Leiterelemente (10) jeweils einen einzigen, in einer der Nuten (4) liegenden Leiterschenkel (10.1) und jeweils in entgegengesetzter Umfangsrichtung abgewinkelte Leiterenden (10.2) aufweisen, wobei sich bei einer Verbindung von zwei Lagen-Leiterelementen (10) eine bestimmte Schrittweite (S), insbesondere von eins auf sieben, und ein Lagensprung um eine Lage ergibt, und/oder dass die Lagenverbinder-Leiterelemente (11) jeweils als Lagen-Leiterelement (10) ausgebildet sind und jeweils zwei erste Wicklungsabschnitte (3.1) oder zwei zweite Wicklungsabschnitte (3.2) miteinander verbinden und dabei einen Lagensprung um eine Lage ausführen.

12. Stator nach einem der vorhergehenden Ansprüche, **dadurch gekennzeichnet, dass** auf einer der beiden Stirnseiten des Stators (1) ausschließlich Verbindungen von Leiterelementen (10) mit einem Lagensprung um eine Lage und mit derselben Schrittweite (S) vorgesehen sind.

13. Stator nach einem der vorhergehenden Ansprüche, **dadurch gekennzeichnet, dass** die Wicklungszweige (6) der Wicklungsstränge (3) jeweils zwei Enden aufweisen, an denen jeweils ein Phaseneingang oder -ausgang vorgesehen ist, wobei die Phaseneingänge- und ausgänge aller Wicklungszweige in Umfangsrichtung gesehen in einem kreissegmentförmigen Bereich von zwei benachbarten Magnetpolen angeordnet und insbesondere als Lagen-Leiterelemente ausgebildet sind.

## Claims

1. Stator (1) for an electric machine, having a polyphase winding which is formed as an insert winding and which has winding strands (3) assigned to a particular electrical phase (u, v, w), which winding strands run in each case in undulating fashion through grooves (4) formed in the stator (1) and are formed in each case from different types of conductor elements (5, 10, 11, 12), and having a number of holes (q) of in particular two,
- wherein the conductor elements (5, 10, 11, 12) are arranged in the respective groove (4) in a particular groove layer between a first or lowermost layer, facing toward a groove base, and an n-th or uppermost groove layer, averted from the groove base, wherein n corresponds to the number of conductor elements (5, 10, 11, 12) per groove (4), is an even number and amounts to at least four, wherein the conductor elements (5, 10, 11, 12) are in each case connected to one another by cohesive joining connections (9) to form the respective winding strand (3), in particular on both face sides of the stator (1),
- each winding strand (3) has a sequence of multiple first winding portions (3.1) and a sequence of multiple second winding portions (3.2) connected to the sequence of first winding portions (3.1), wherein, in each first winding portion (3.1) and in each second winding portion (3.2), there is alternation in each case between the same two adjacent groove layers,
- wherein each first and second winding portion (3.1, 3.2) comprises layer conductor elements (10) between its ends,
- wherein each first or second winding portion (3.1, 3.2) respectively with respect to the groove layer is connected to the immediately overlying or immediately underlying first or second winding portion (3.1, 3.2) respectively by means of a connection of two layer connector conductor elements (11),
- wherein the uppermost or lowermost first winding portions (3.1, 3.2) respectively with respect to the groove layer are connected in each case by means of a reversal connector conductor element (12) to one of the uppermost or lowermost second winding portions (3.2) respectively such that the sequence of second winding portions (3.2) runs in the opposite circumferential direction in relation to the sequence of first winding portions (3.1), wherein the reversal connector conductor elements (12, 13) have in each case one reversal limb (12.1, 13.1) which is situated in the uppermost or lowermost groove layer and whose connecting portions (12.2, 13.2), projecting out of the respective groove (4) on both sides, run in the same circumferential direction with respect to the stator axis (1.1) as viewed from the same face side of the stator (1) and which is in particular the only limb, situated in one of the grooves (4), of the reversal connector conductor element (12, 13), **characterized in that**
- the reversal limbs (12.1, 13.1) of the reversal connector conductor elements (12, 13) are, in each case at their two connecting portions (12.2, 13.2), connected on one side by means of a first reversal connection (14) to a conductor limb, situated in a second-uppermost or second-lowermost groove layer, of an uppermost or lowermost winding portion (3.1, 3.2) and on the other side by means of a second reversal connection (15) to a conductor limb, situated in the same groove layer, of an uppermost or lowermost winding portion (3.1, 3.2), wherein the interval width (S) of the second reversal connection (15) differs from, in particular is smaller than, the interval width (S) of the first reversal connection (14) in the case of a shortened reversal connector conductor element (12) by one groove (4), and is equal in the case of an unshortened reversal connector conductor element (13), wherein
- each winding strand (3) has a number of at least two parallel winding branches (6, 6.1, 6.2), wherein each parallel winding branch (6) comprises a single sequence of multiple first winding portions (3.1) and a single sequence of multiple second winding portions (3.2).

2. Stator according to Claim 1, **characterized in that** a sequence of multiple first winding portions (3.1) of a first winding branch (6.1) is provided in each case in a first set of grooves (4) and a sequence of multiple second winding portions (3.2) of the same first winding branch (6.1) is provided in each case in a second set of grooves (4), wherein the first set of grooves (4) is offset with respect to the second set of grooves (4) in each case by one groove (4), wherein a sequence of multiple first winding portions (3.1) of a parallel second winding branch (6.2) of the same winding strand (3) is provided in each case in the first set of grooves (4) and a sequence of multiple second winding portions (3.2) of the same second winding branch (6.2) is provided in each case in the second set of grooves (4), wherein, for each winding branch (6.1, 6.2), the in each case uppermost first or second winding portion (3.1, 3.2) respectively is connected by means of a shortened reversal connector conductor element (12) to an uppermost second or first winding portion (3.2, 3.1) respectively and the in each case lowermost first or second winding portion (3.1, 3.2) respectively is connected by means of a further shortened reversal connector conductor element (12) to a lowermost second or first winding portion (3.2, 3.1) respectively.

3. Stator according to either of Claims 1 and 2, **characterized in that** each winding branch (3.1, 3.2) has two shortened reversal connector conductor elements (12), of which one shortened reversal connector conductor element (12) is arranged in one of the cophasal grooves (4) of a magnetic pole (τₚ) in the uppermost groove layer and the other shortened reversal connector conductor element (12) is arranged in the lowermost groove layer of the other cophasal groove (4) of the same magnetic pole (τₚ), or vice versa.

4. Stator according to Claim 3, **characterized in that** the winding strand (3) has a pair of parallel winding branches (6, 6.1, 6.2), wherein the shortened reversal connector conductor elements (12) of one winding branch (6.1) are arranged in the corresponding groove layer of the corresponding cophasal grooves of a first magnetic pole (τₚ) and the shortened reversal connector conductor elements (12) of the other winding branch (6.2) are arranged in the corresponding groove layer of the corresponding cophasal grooves (4) of a second magnetic pole (τₚ) which is adjacent to the first magnetic pole (τₚ), or **in that** the winding strand (3) has two pairs of winding branches (6), wherein the shortened reversal connector conductor elements (12) of the first pair of parallel winding branches (6) are arranged in the corresponding cophasal grooves (4) of two adjacent first magnetic poles (τₚ) and the shortened reversal connector conductor elements (12) of the second pair of parallel winding branches (6) are arranged in the corresponding cophasal grooves (4) of two adjacent magnetic poles (τₚ) which are offset by 180 degrees with respect to the adjacent first magnetic poles (τₚ), or **in that** the winding strand (3) has four pairs of winding branches (6), wherein the shortened reversal connector conductor elements (12) of the first pair of parallel winding branches (6) are arranged in the corresponding cophasal grooves of two adjacent first magnetic poles (τₚ) and the shortened reversal connector conductor elements (12) of the second, third and fourth pairs of parallel winding branches (6) are arranged in the corresponding cophasal grooves (4) of two adjacent magnetic poles (τₚ) which are offset by 90 or 180 or 270 degrees respectively with respect to the adjacent first magnetic poles (τₚ).

5. Stator (1) for an electric machine, having a polyphase winding which is formed as an insert winding and which has winding strands (3) assigned to a particular electrical phase (u, v, w), which winding strands run in each case in undulating fashion through grooves (4) formed in the stator (1) and are formed in each case from different types of conductor elements (5, 10, 11, 12), and having a number of holes (q) of in particular two,
- wherein the conductor elements (5, 10, 11, 12) are arranged in the respective groove (4) in a particular groove layer between a first or lowermost layer, facing toward a groove base, and an n-th or uppermost groove layer, averted from the groove base, wherein n corresponds to the number of conductor elements (5, 10, 11, 12) per groove (4), is an even number and amounts to at least four, wherein the conductor elements (5, 10, 11, 12) are in each case connected to one another by cohesive joining connections (9) to form the respective winding strand (3), in particular on both face sides of the stator (1),
- each winding strand (3) has a sequence of multiple first winding portions (3.1) and a sequence of multiple second winding portions (3.2) connected to the sequence of first winding portions (3.1), wherein, in each first winding portion (3.1) and in each second winding portion (3.2), there is alternation in each case between the same two adjacent groove layers,
- wherein each first and second winding portion (3.1, 3.2) comprises layer conductor elements (10) between its ends,
- wherein each first or second winding portion (3.1, 3.2) respectively with respect to the groove layer is connected to the immediately overlying or immediately underlying first or second winding portion (3.1, 3.2) respectively by means of a connection of two layer connector conductor elements (11),
- wherein the uppermost or lowermost first winding portions (3.1, 3.2) respectively with respect to the groove layer are connected in each case by means of a reversal connector conductor element (12) to one of the uppermost or lowermost second winding portions (3.2) respectively such that the sequence of second winding portions (3.2) runs in the opposite circumferential direction in relation to the sequence of first winding portions (3.1), wherein the reversal connector conductor elements (12, 13) have in each case one reversal limb (12.1, 13.1) which is situated in the uppermost or lowermost groove layer and whose connecting portions (12.2, 13.2), projecting out of the respective groove (4) on both sides, run in the same circumferential direction with respect to the stator axis (1.1) as viewed from the same face side of the stator (1) and which is in particular the only limb, situated in one of the grooves (4), of the reversal connector conductor element (12, 13), **characterized in that**
- each winding strand (3) has a single winding branch (6), wherein the single winding branch (6) comprises a sequence of multiple first winding portions (3.1), a sequence of multiple second winding portions (3.2), a further sequence of multiple first winding portions (3.1) and a further sequence of multiple second winding portions (3.2), in particular in the stated sequence.

6. Stator according to Claim 5, **characterized in that** the sequence of multiple first winding portions (3.1) is provided in a first set of grooves (4) and the sequence of multiple second winding portions (3.2) is provided so as to run in the opposite direction in the first set of grooves (4), and, following this, the further sequence of multiple first winding portions (3.1) is provided in a second set of grooves (4) and the further sequence of multiple second winding portions (3.2) is provided so as to run in the opposite direction in the second set of grooves (4).

7. Stator according to Claim 5, **characterized in that** the sequence of multiple first winding portions (3.1) is provided in a first set of grooves (4) and the sequence of multiple second winding portions (3.2) is provided so as to run in the opposite direction in a second set of grooves (4) and, following this, the further sequence of multiple first winding portions (3.1) is provided in the first set of grooves (4) and the further sequence of multiple second winding portions (3.2) is provided so as to run in the opposite direction in the second set of grooves (4).

8. Stator according to Claim 6, **characterized in that** the sequence of multiple first winding portions (3.1) of a winding strand (3) is connected by means of an unshortened reversal connector conductor element (12) to the sequence of multiple second winding portions (3.2), wherein the sequence of multiple second winding portions (3.2) is connected to the further sequence of multiple first winding portions (3.1) by means of a shortened reversal connector conductor element (13), wherein the further sequence of multiple first winding portions (3.1) is connected to the further sequence of multiple second winding portions (3.2) by means of an unshortened reversal connector conductor element (12), and wherein the further sequence of multiple second winding portions (3.2) is connected by means of a shortened reversal connector conductor element (13) to the sequence of multiple first winding portions (3.1).

9. Stator according to any of Claims 5 to 8, **characterized in that** each winding strand (3) has two shortened reversal connector conductor elements (12) and two unshortened reversal connector conductor elements (13), wherein one of the shortened reversal connector conductor elements (12) is arranged in the uppermost groove layer and one of the unshortened reversal connector conductor elements (13) is arranged in the lowermost groove layer in the same groove of a magnetic pole (τₚ), or vice versa, and wherein the further shortened reversal connector conductor element (12) is arranged in the uppermost groove layer and the further unshortened reversal connector conductor element (13) is arranged in the lowermost groove layer, or vice versa, in adjacent cophasal grooves of the adjacent magnetic pole (τₚ).

10. Stator according to any of the preceding claims, **characterized in that** each first and/or second winding portion (3.1, 3.2) alternates between the same two adjacent groove layers until the two groove layers have in each case been run through a certain number N of times, wherein N is calculated from N=2p/a, wherein 2p is the number of magnetic poles (τₚ) and a is the number of parallel winding branches (6) per winding strand (3).

11. Stator according to any of the preceding claims, **characterized in that** the layer conductor elements (10) have in each case one single conductor limb (10.1) situated in one of the grooves (4) and conductor ends (10.2) angled in each case in opposite circumferential directions, wherein, in the case of a connection of two layer conductor elements (10), there is a resulting particular interval width (S), in particular of one to seven, and a layer step by one layer, and/or **in that** the layer connector conductor elements (11) are formed in each case as a layer conductor element (10) and connect in each case two first winding portions (3.1) or two second winding portions (3.2) to one another and in so doing perform a layer step by one layer.

12. Stator according to any of the preceding claims, **characterized in that**, on one of the two face sides of the stator (1), there are provided exclusively connections of conductor elements (10) with a layer step by one layer and with the same interval width (S) .

13. Stator according to any of the preceding claims, **characterized in that** the winding branches (6) of the winding strands (3) have in each case two ends at which in each case one phase input or output is provided, wherein the phase inputs and outputs of all winding branches are, as viewed in a circumferential direction, arranged in a circular-segment-shaped region of two adjacent magnetic poles and are formed in particular as layer conductor elements.

## Revendications

1. Stator (1) pour une machine électrique, comprenant un enroulement polyphasé, réalisé sous forme d'enroulement enfichable, qui présente des faisceaux d'enroulement (3) associés à une phase électrique déterminée (u, v, w) et qui s'étendent respectivement de façon ondulée à travers des rainures (4) réalisées dans le stator (1) et sont formés respectivement à partir de différents types d'éléments conducteurs (5, 10, 11, 12), et comprenant un nombre de trous (q), en particulier deux,
- les éléments conducteurs (5, 10, 11, 12) étant disposés dans la rainure (4) respective dans une position de rainure déterminée entre une première position ou position inférieure, tournée vers un fond de rainure, et une n-ème position de rainure ou position de rainure supérieure, détournée du fond de rainure, dans lequel n correspond au nombre des éléments conducteurs (5, 10, 11, 12) par rainure (4), est un nombre pair et est au moins égal à quatre, les éléments conducteurs (5, 10, 11, 12) étant reliés les uns aux autres respectivement par des emmanchements (9) par liaison de matière afin de former le faisceau d'enroulement (3) respectif, en particulier sur les deux faces frontales du stator (1),
- chaque faisceau d'enroulement (3) présentant une séquence de plusieurs premières sections d'enroulement (3.1) et une séquence de plusieurs deuxièmes sections d'enroulement (3.2) reliées à la séquence de premières sections d'enroulement (3.1), dans lequel, dans chaque première section d'enroulement (3.1) et dans chaque deuxième section d'enroulement (3.2), on alterne respectivement entre les deux mêmes positions de rainure voisines,
- chaque première et deuxième section d'enroulement (3.1, 3.2) comprenant des éléments conducteurs de position (10) entre ses extrémités,
- chaque première ou deuxième section d'enroulement (3.1, 3.2) étant reliée concernant la position de rainure à la première ou deuxième section d'enroulement (3.1, 3.2) suivante située au-dessus ou au-dessous par une liaison de deux éléments conducteurs de liaison de position (11),
- les premières sections d'enroulement (3.1, 3.2), supérieures ou inférieures par rapport à la position de rainure, étant respectivement reliées par un élément conducteur de liaison inversé (12) à l'une des deuxièmes sections d'enroulement (3.2) supérieures ou inférieures de telle sorte que la séquence de deuxièmes sections d'enroulement (3.2) s'étend dans la direction circonférentielle opposée par rapport à la séquence de premières sections d'enroulement (3.1), les éléments conducteurs de liaison inversés (12, 13) présentant respectivement une branche d'inversion (12.1, 13.1) située dans la position de rainure supérieure ou inférieure, dont les sections de liaison (12.2, 13.2) faisant saillie des deux côtés de la rainure (4) respective, vues à partir de la même face frontale du stator (1), s'étendent dans la même direction circonférentielle par rapport à l'axe de stator (1.1), et qui est en particulier l'unique branche située dans l'une des rainures (4) de l'élément conducteur de liaison inversé (12, 13),
**caractérisé en ce que**
- les branches d'inversion (12.1, 13.1) des éléments conducteurs de liaison inversés (12, 13) sont reliées respectivement au niveau de leurs deux sections de liaison (12.2, 13.2) d'un côté par l'intermédiaire d'une première liaison inversée (14) à une branche de conducteur située dans une deuxième position de rainure supérieure ou inférieure d'une section d'enroulement supérieure ou inférieure (3.1, 3.2), et sont reliées de l'autre côté par l'intermédiaire d'une deuxième liaison inversée (15) à une branche de conducteur située dans la même position de rainure d'une section d'enroulement supérieure ou inférieure (3.1, 3.2), la largeur de pas (S) de la deuxième liaison inversée (15) par rapport à la largeur de pas (S) de la première liaison inversée (14) étant différente, en particulier inférieure, d'une rainure (4) pour un élément conducteur de liaison inversé (12) raccourci et étant identique pour un élément conducteur de liaison inversé (13) non raccourci, dans lequel
- chaque faisceau d'enroulement (3) présente un nombre d'au moins deux branches d'enroulement parallèles (6, 6.1, 6.2), chaque branche d'enroulement parallèle (6) comprenant une seule séquence de plusieurs premières sections d'enroulement (3.1) et une seule séquence de plusieurs deuxièmes sections d'enroulement (3.2).

2. Stator selon la revendication 1, **caractérisé en ce qu'**une séquence de plusieurs premières sections d'enroulement (3.1) d'une première branche d'enroulement (6.1) est prévue respectivement dans un premier ensemble de rainures (4) et une séquence de plusieurs deuxièmes sections d'enroulement (3.2) de la même première branche d'enroulement (6.1) est prévue respectivement dans un deuxième ensemble de rainures (4), le premier ensemble de rainures (4) étant décalé respectivement d'une rainure (4) par rapport au deuxième ensemble de rainures (4), une séquence de plusieurs premières sections d'enroulement (3.1) d'une deuxième branche d'enroulement parallèle (6.2) du même faisceau d'enroulement (3) étant respectivement prévue dans le premier ensemble de rainures (4), et une séquence de plusieurs deuxièmes sections d'enroulement (3.2) de la même deuxième branche d'enroulement (6.2) étant respectivement prévue dans le deuxième ensemble de rainures (4), dans lequel, pour chaque branche d'enroulement (6.1, 6.2), la première ou deuxième section d'enroulement (3.1, 3.2) respectivement supérieure est reliée par l'intermédiaire d'un élément conducteur de liaison inversé (12) raccourci à une deuxième ou première section d'enroulement (3.2, 3.1) supérieure, et la première ou deuxième section d'enroulement (3.1, 3.2) respectivement inférieure est reliée par l'intermédiaire d'un autre élément conducteur de liaison inversé (12) raccourci à une deuxième ou première section d'enroulement (3.2, 3.1) inférieure.

3. Stator selon l'une quelconque des revendications 1 et 2, **caractérisé en ce que** chaque branche d'enroulement (3.1, 3.2) présente deux éléments conducteurs de liaison inversés (12) raccourcis, dont ledit un élément conducteur de liaison inversé (12) raccourci est disposé dans l'une des rainures en phase (4) d'un pôle magnétique (τₚ) dans la position de rainure supérieure, et l'autre élément conducteur de liaison inversé (12) raccourci est disposé dans la position de rainure inférieure de l'autre rainure en phase (4) du même pôle magnétique (τₚ), ou vice versa.

4. Stator selon la revendication 3, **caractérisé en ce que** le faisceau d'enroulement (3) présente une paire de branches d'enroulement parallèles (6, 6.1, 6.2), les éléments conducteurs de liaison inversés (12) raccourcis de ladite une branche d'enroulement (6.1) étant disposés dans la position de rainure correspondante des rainures en phase correspondantes d'un premier pôle magnétique (τₚ) et les éléments conducteurs de liaison inversés (12) raccourcis de l'autre branche d'enroulement (6.2) étant disposés dans la position de rainure correspondante des rainures en phase correspondantes (4) d'un deuxième pôle magnétique (τₚ) voisin du premier pôle magnétique (τₚ), ou **en ce que** le faisceau d'enroulement (3) présente deux paires de branches d'enroulement (6), les éléments conducteurs de liaison inversés (12) raccourcis de la première paire de branches d'enroulement parallèles (6) étant disposés dans les rainures (4) en phase correspondantes de deux premiers pôles magnétiques (τₚ) voisins, et les éléments conducteurs de liaison inversés (12) raccourcis de la deuxième paire de branches d'enroulement parallèles (6) étant disposés dans les rainures (4) en phase correspondantes de deux pôles magnétiques (τₚ) voisins, décalés de 180 degrés par rapport aux premiers pôles magnétiques (τₚ) voisins, ou **en ce que** le faisceau d'enroulement (3) présente quatre paires de branche d'enroulement (6), les éléments conducteurs de liaison inversés (12) raccourcis de la première paire de branches d'enroulement parallèles (6) étant disposés dans les rainures en phase correspondantes de deux premiers pôles magnétiques (τₚ) voisins, et les éléments conducteurs de liaison inversés (12) raccourcis de la deuxième, de la troisième et de la quatrième paire de branches d'enroulement parallèles (6) étant disposés dans les rainures (4) en phase correspondantes de deux pôles magnétiques (τₚ) voisins, décalés de 90 ou de 180 ou de 270 degrés par rapport aux premiers pôles magnétiques (τₚ) voisins.

5. Stator (1) pour une machine électrique, comprenant un enroulement polyphasé, réalisé sous forme d'enroulement enfichable, qui présente des faisceaux d'enroulement (3) associés à une phase électrique déterminée (u, v, w) et qui s'étendent respectivement de façon ondulée à travers des rainures (4) réalisées dans le stator (1) et sont formés respectivement à partir de différents types d'éléments conducteurs (5, 10, 11, 12), et comprenant un nombre de trous (q), en particulier deux,
- les éléments conducteurs (5, 10, 11, 12) étant disposés dans la rainure (4) respective dans une position de rainure déterminée entre une première position ou position inférieure, tournée vers un fond de rainure, et une n-ème position de rainure ou position de rainure supérieure, détournée du fond de rainure, dans lequel n correspond au nombre des éléments conducteurs (5, 10, 11, 12) par rainure (4), est un nombre pair et est au moins égal à quatre, les éléments conducteurs (5, 10, 11, 12) étant reliés les uns aux autres respectivement par des emmanchements (9) par liaison de matière afin de former le faisceau d'enroulement (3) respectif, en particulier sur les deux faces frontales du stator (1),
- chaque faisceau d'enroulement (3) présentant une séquence de plusieurs premières sections d'enroulement (3.1) et une séquence de plusieurs deuxièmes sections d'enroulement (3.2) reliées à la séquence de premières sections d'enroulement (3.1), dans lequel, dans chaque première section d'enroulement (3.1) et dans chaque deuxième section d'enroulement (3.2), on alterne respectivement entre les deux mêmes positions de rainure voisines,
- chaque première et deuxième section d'enroulement (3.1, 3.2) comprenant des éléments conducteurs de position (10) entre ses extrémités,
- chaque première ou deuxième section d'enroulement (3.1, 3.2) étant reliée concernant la position de rainure à la première ou deuxième section d'enroulement (3.1, 3.2) suivante située au-dessus ou au-dessous par une liaison de deux éléments conducteurs de liaison de position (11),
- les premières sections d'enroulement (3.1, 3.2), supérieures ou inférieures par rapport à la position de rainure, étant respectivement reliées par un élément conducteur de liaison inversé (12) à l'une des deuxièmes sections d'enroulement (3.2) supérieures ou inférieures de telle sorte que la séquence de deuxièmes sections d'enroulement (3.2) s'étend dans la direction circonférentielle opposée par rapport à la séquence de premières sections d'enroulement (3.1), les éléments conducteurs de liaison inversés (12, 13) présentant respectivement une branche d'inversion (12.1, 13.1) située dans la position de rainure supérieure ou inférieure, dont les sections de liaison (12.2, 13.2) faisant saillie des deux côtés de la rainure (4) respective, vues à partir de la même face frontale du stator (1), s'étendent dans la même direction circonférentielle par rapport à l'axe de stator (1.1), et qui est en particulier l'unique branche située dans l'une des rainures (4) de l'élément conducteur de liaison inversé (12, 13),
**caractérisé en ce que**
- chaque faisceau d'enroulement (3) présente une seule branche d'enroulement (6), l'unique branche d'enroulement (6) comprenant une séquence de plusieurs premières sections d'enroulement (3.1), une séquence de plusieurs deuxièmes sections d'enroulement (3.2), une autre séquence de plusieurs premières sections d'enroulement (3.1) et une autre séquence de plusieurs deuxièmes sections d'enroulement (3.2), en particulier dans l'ordre mentionné.

6. Stator selon la revendication 5, **caractérisé en ce que** la séquence de plusieurs premières sections d'enroulement (3.1) est prévue dans un premier ensemble de rainures (4), et la séquence de plusieurs deuxièmes sections d'enroulement (3.2) est prévue en s'étendant dans une direction opposée dans le premier ensemble de rainures (4), et par la suite, l'autre séquence de plusieurs premières sections d'enroulement (3.1) est prévue dans un deuxième ensemble de rainures (4), et l'autre séquence de plusieurs deuxièmes sections d'enroulement (3.2) est prévue en s'étendant dans la direction opposée dans le deuxième ensemble de rainures (4) .

7. Stator selon la revendication 5, **caractérisé en ce que** la séquence de plusieurs premières sections d'enroulement (3.1) est prévue dans un premier ensemble de rainures (4), et la séquence de plusieurs deuxièmes sections d'enroulement (3.2) est prévue en s'étendant dans une direction opposée dans un deuxième ensemble de rainures (4), et par la suite l'autre séquence de plusieurs premières sections d'enroulement (3.1) est prévue dans le premier ensemble de rainures (4), et l'autre séquence de plusieurs deuxièmes sections d'enroulement (3.2) est prévue en s'étendant dans une direction opposée dans le deuxième ensemble de rainures (4) .

8. Stator selon la revendication 6, **caractérisé en ce que** la séquence de plusieurs premières sections d'enroulement (3.1) d'un faisceau d'enroulement (3) est reliée par l'intermédiaire d'un élément conducteur de liaison inversé (12) non raccourci à la séquence de plusieurs deuxièmes sections d'enroulement (3.2), la séquence de plusieurs deuxièmes sections d'enroulement (3.2) étant reliée à l'autre séquence de plusieurs premières sections d'enroulement (3.1) par l'intermédiaire d'un élément conducteur de liaison inversé (13) raccourci, l'autre séquence de plusieurs premières sections d'enroulement (3.1) étant reliée à l'autre séquence de plusieurs deuxièmes sections d'enroulement (3.2) par l'intermédiaire d'un élément conducteur de liaison inversé (12) raccourci, et l'autre séquence de plusieurs deuxièmes sections d'enroulement (3.2) étant reliée par l'intermédiaire d'un élément conducteur de liaison inversé (13) raccourci à la séquence de plusieurs premières sections d'enroulement (3.1).

9. Stator selon l'une quelconque des revendications 5 à 8, **caractérisé en ce que** chaque faisceau d'enroulement (3) présente deux éléments conducteurs de liaison inversés (12) raccourcis et deux éléments conducteurs de liaison inversés (13) non raccourcis, l'un des éléments conducteurs de liaison inversés (12) raccourcis étant disposé dans la position de rainure supérieure, et l'un des éléments conducteurs de liaison inversés (13) non raccourcis étant disposé dans la position de rainure inférieure dans la même rainure d'un pôle magnétique (τₚ), ou vice versa, et l'autre élément conducteur de liaison inversé (12) raccourci étant disposé dans la position de rainure supérieure et l'autre élément conducteur de liaison inversé (13) non raccourci étant disposé dans la position de rainure inférieure, ou vice versa, dans des rainures en phase voisines du pôle magnétique (τₚ) voisin.

10. Stator selon l'une quelconque des revendications précédentes, **caractérisé en ce que** chaque première et/ou deuxième section d'enroulement (3.1, 3.2) alterne entre les deux mêmes positions de rainure voisines jusqu'à ce que les deux positions de rainure aient été passées respectivement un certain nombre de fois N, N résultant de N = 2p/a, où 2p est le nombre des pôles magnétiques (τₚ) et a est le nombre des branches d'enroulement parallèles (6) par faisceau d'enroulement (3).

11. Stator selon l'une quelconque des revendications précédentes, **caractérisé en ce que** les éléments conducteur de position (10) présentent respectivement une seule branche de conducteur (10.1) située dans l'une des rainures (4) et respectivement des extrémités de conducteur (10.2) coudées dans la direction circonférentielle opposée, dans lequel, lors d'une liaison de deux éléments conducteurs de position (10), une largeur de pas (S) déterminée, en particulier de un à sept, et un saut de position d'une position résultent, et/ou **en ce que** les éléments conducteurs de liaison de position (11) sont réalisés respectivement sous forme d'élément conducteur de position (10) et relient respectivement deux premières sections d'enroulement (3.1) ou deux deuxièmes sections d'enroulement (3.2) les unes aux autres tout en effectuant un saut de position d'une position.

12. Stator selon l'une quelconque des revendications précédentes, **caractérisé en ce que** seules des liaisons d'éléments conducteurs (10) à saut de position d'une position et ayant la même largeur de pas (S) sont prévues sur l'une des deux faces frontales du stator (1).

13. Stator selon l'une quelconque des revendications précédentes, **caractérisé en ce que** les branches d'enroulement (6) des faisceaux d'enroulement (3) présentent respectivement deux extrémités auxquelles respectivement une entrée ou sortie de phase est prévue, les entrées et sorties de phase de toutes les branches d'enroulement, vues dans la direction circonférentielles, étant disposées dans une zone en forme d'arc de cercle de deux pôles magnétiques voisins et étant en particulier réalisées sous forme d'éléments conducteurs de position.
